# EUROPEAN PATENT APPLICATION

(11) **EP 4 531 383 A1**
(43) Date of publication of application: **02.04.2025**
(21) Application number: 23831697.0
(22) Date of filing: 27.04.2023
(51) Int. Cl.: H04M 1/02, F16C 11/04, G06F 1/16

(54) **FOLDABLE ELECTRONIC DEVICE COMPRISING DRIVING UNIT FOR STATE CHANGE**

(30) Priority: 29.06.2022 KR 20220080084; 08.08.2022 KR 20220098895
(71) Applicant: Samsung Electronics Co., Ltd., Suwon-si, Gyeonggi-do 16677 (KR)
(72) Inventor: RHEE, Minsu, Suwon-si Gyeonggi-do 16677 (KR); LIM, Gun, Suwon-si Gyeonggi-do 16677 (KR)
(74) Representative: HGF
(86) International application number: PCT/KR2023/005809
(87) International publication number: WO 2024/005332

(57) **Abstract**

An electronic device according to one embodiment may further comprise a plurality of sensors and a processor. According to one embodiment, the processor can be configured to receive a user input indicating that the folding state of a flexible display, of which at least a part is covered by a second housing and a third housing, transits into the unfolding state of the flexible display exposed toward the outside. According to one embodiment, the processor can be configured to identify, in response to the user input, a reference pose corresponding to the pose of the electronic device identified through the plurality of sensors from among a plurality of reference poses predetermined with respect to the folding state.

## Description

### [Technical Field]

Various embodiments of the disclosure relate to a foldable electronic device including an actuator (or driving unit) for a state change.

### [Background Art]

Electronic devices including a large-screen display can increase usability for a user. With the increasing demand for highly portable electronic devices, the electronic device may include a deformable display. Such a deformable display may be slidably deformable, foldably deformable, or rollably deformable.

### [Disclosure of Invention]

### [Technical Problem]

A foldable device including a foldably deformable display may provide a structure capable of being folded several times to provide a large-screen display. The foldable device that may be foldable two or more times may be folded in a variety of ways.

For foldable devices that may be folded in various ways, there may be an increased risk of damage to an electronic device due to any improper folding methods in use. Thus, a solution capable of preventing damage to the electronic device due to such an improper usage may be required.

The technical problems to be addressed in the disclosure are not limited to those described above, and other technical problems not mentioned herein will be clearly understood by those having ordinary knowledge in the technical filed to which the disclosure belongs from the following description.

### [Technical Solution]

According to an embodiment, an electronic device may comprise a first housing including a first surface and a second surface opposite to the first surface, a second housing including a third surface and a fourth surface opposite to the third surface, and a third housing including a fifth surface and a sixth surface opposite to the fifth surface. An electronic device according to an embodiment may further comprise a first hinge structure rotatably coupling a first housing and a second housing, a first actuator coupled with the first hinge structure, a second hinge structure rotatably coupling the first housing and the third housing, and a second actuator coupled with the second hinge structure. An electronic device according to an embodiment may further comprise a flexible display disposed on the first surface, the third surface and the fifth surface, including a first area corresponding to the first surface, a second area corresponding to the third surface, and a third area corresponding to the third surface. An electronic device according to an embodiment may further comprise a plurality of sensors, and a processor. According to an embodiment, the processor may be configured to receive a user input indicating a change (transit) from a folded (folding) state including the flexible display at least partially covered by the second housing and the third housing, to an unfolded (unfolding) state including the flexible display exposed to an outside. According to an embodiment, the processor may be configured to, in response to the user input, identify a reference posture corresponding to a posture of the electronic device identified through the plurality of sensors among a plurality of predetermined reference postures with respect to the folded state. According to an embodiment, the processor may be configured to identify a reference driving scheme corresponding to the reference posture among a plurality of reference driving schemes. According to an embodiment, the processor may be configured to, based on controlling the first actuator and the second actuator according to the reference driving scheme, change the folded state to the unfolded state.

According to an embodiment, an electronic device may comprise a first housing including a first surface and a second surface opposite to the first surface, a second housing including a third surface and a fourth surface opposite to the third surface, and a third housing including a fifth surface and a sixth surface opposite to the fifth surface. According to an embodiment, an electronic device may comprise a first hinge structure rotatably coupling a first housing and a second housing to change an angle between the first surface and the third surface from 0 degrees to 180 degrees, a first actuator coupled with the first hinge structure, a second hinge structure rotatably coupling the first housing and the third housing to change an angle between the first surface and the fifth surface from 0 degrees to 180 degrees, a second actuator coupled with the second hinge structure. According to an embodiment, an electronic device may comprise a flexible display disposed on the first surface, the third surface and the fifth surface, including a first area corresponding to the first surface, a second area corresponding to the third surface, and a third area corresponding to the third surface. According to an embodiment, an electronic device may comprise a plurality of sensors and a processor. According to an embodiment, the processor may be configured to receive a user input indicating a change (transit) from a folded state including the flexible display at least partially covered by the second housing and the third housing, to an unfolded state including the flexible display exposed to an outside. According to an embodiment, the processor may be configured to, in response to the user input, identify a reference posture corresponding to a posture of the electronic device identified through the plurality of sensors among a plurality of predetermined reference postures with respect to the folded state. According to an embodiment, the processor may be configured to identify a reference driving scheme corresponding to the reference posture among a plurality of reference driving schemes. According to an embodiment, the processor may be configured to, based on controlling the first actuator and the second actuator according to the reference driving scheme, change the folded state to the unfolded state.

### [Effects of Invention]

According to an embodiment, an electronic device providing a designated folding sequence or unfolding sequence may reduce damage to the electronic device owing to folding operation that is out of sequence.

According to an embodiment, the electronic device may provide a designated sequence of folding or unfolding operation and be folded or unfolded by means of an actuator, thereby enhancing a user's convenience.

The effects that can be obtained in the disclosure are not limited to those described above, and other effects not mentioned herein will be clearly understood by those having ordinary knowledge in the technical field to which the disclosure belongs from the following description.

### [Brief Description of the Drawings]

FIG. 1 is a block diagram of an electronic device in a network environment according to various embodiments.
FIG. 2 is a block diagram of an electronic device according to an embodiment.
FIG. 3 illustrates a plurality of states of an electronic device having a first shape according to an embodiment.
FIG. 4 illustrates a plurality of states of an electronic device having a second shape according to an embodiment.
FIG. 5 illustrates a plurality of states of an electronic device having a third shape according to an embodiment.
FIGS. 6A, 6B, 6C, and 6D illustrate unfolding operations according to postures of an electronic device having a first shape according to an embodiment.
FIGS. 7A, 7B, 7C, and 7D illustrate unfolding operations according to different postures of an electronic device having a second shape according to an embodiment.
FIGS. 8A, 8B, 8C, and 8D illustrate unfolding operations according to different postures of an electronic device having a third shape according to an embodiment.
FIGS. 9A and 9B illustrate folding operations according to different postures of an electronic device having a first shape, according to an embodiment.
FIGS. 10A and 10B illustrate folding operations according to different postures of an electronic device having a second shape according to an embodiment.
FIGS. 11A and 11B illustrate folding operations according to different postures of an electronic device having a third shape according to an embodiment.
FIG. 12 is a flowchart illustrating an unfolding operation of an electronic device according to an embodiment.

### [Mode for Carrying out the Invention]

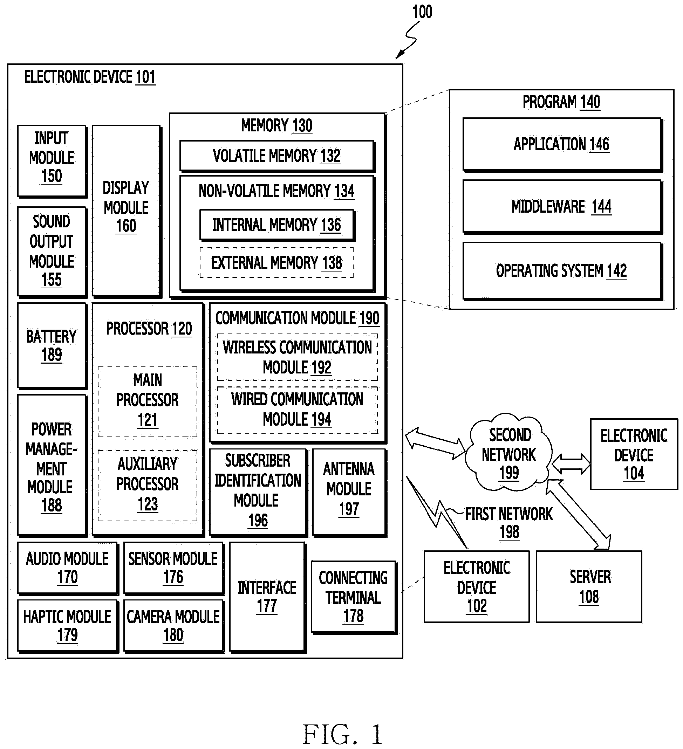

FIG. 1 is a block diagram of an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may change a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may change an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

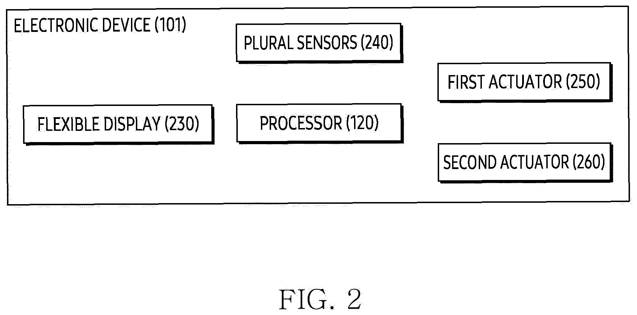

FIG. 2 is a block diagram of an electronic device according to an embodiment.

Referring to FIG. 2, an electronic device 101 may have a structure capable of folding or unfolding through a flexible display 230 (e.g., the display module 160 of FIG. 1). The electronic device 101 may be referred to as a foldable electronic device. The electronic device 101 may change a posture of the electronic device 101 by means of a first actuator 250 or a second actuator 260, based on identifying the posture of the electronic device 101 through a plurality of sensors 240 (e.g., the sensor module 176 of FIG. 1). The electronic device 101 may change the flexible display 230 through the first actuator 250 or the second actuator 260. According to an embodiment, the electronic device 101 may include a processor 120, a flexible display 230, a plurality of sensors 240, a first actuator 250, and/or a second actuator 260.

For example, the flexible display 230 may be flexible. For example, the flexible display 230 may include a display area exposed out of a housing of the electronic device 101 that provides at least a part of an outer surface of the electronic device 101. For example, since the flexible display 230 has flexibility, at least a portion of the flexible display 230 may be folded or unfolded. For example, as the electronic device 101 is either folded or unfolded, the display area may be exposed to the outside or covered by the housing. For example, the electronic device 101 may be in multiple states including a first state for providing the display area unfolded in a flat surface and a second state for providing the display area at least partially folded. The first state may be referred to as an unfolded state in terms of providing the display area unfolded in a flat surface. The second state may be referred to as a folding state in terms of providing a state in which the housings are folded to face each other.

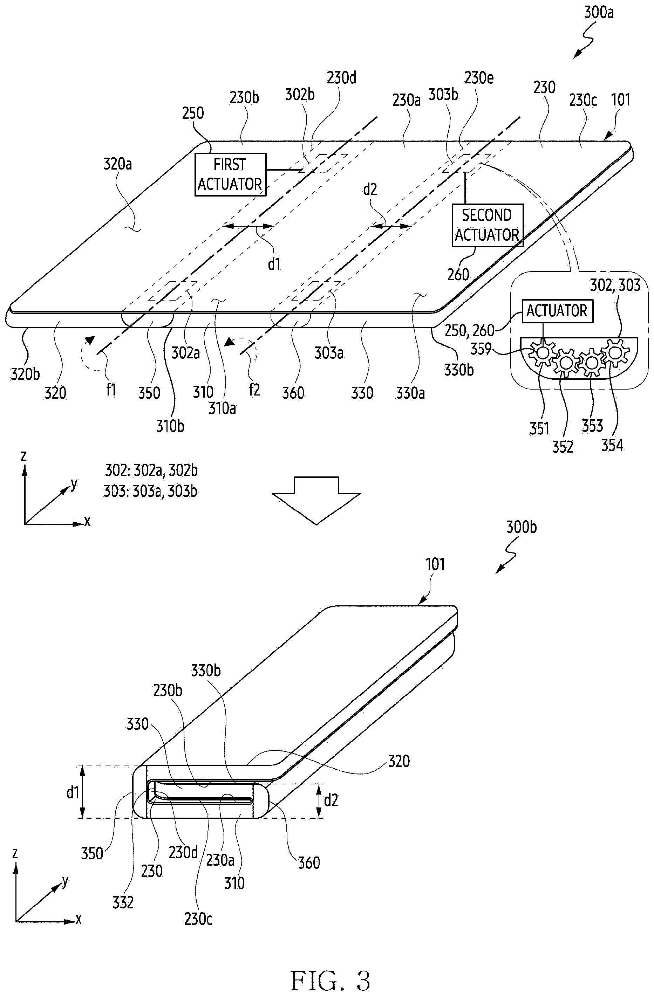

According to an embodiment, the electronic device 101 may be an electronic device having a first shape in which the flexible display 230 is fully covered in the second state. The electronic device may be an electronic device having a second shape in which the flexible display 230 is exposed (visible) through one housing of the electronic device in the second state. The electronic device 101 may be an electronic device having a third shape in which the flexible display 230 is exposed (visible) through two housings of the electronic device in the second state. For example, the first shape may be illustrated through the description of FIG. 3.

FIG. 3 illustrates a plurality of states of an electronic device having a first shape according to an embodiment.

Referring to FIG. 3, the electronic device 101 may include a first housing 310, a second housing 320, and a third housing 330. The electronic device 101 may be unfolded in a first state 300a.

According to an embodiment, the electronic device 101 may include the first housing 310, the second housing 320, and the third housing 330. The first housing 310 may include a first surface 310a and a second surface 310b. The second surface 310b may be opposite to the first surface 310a. The second housing 320 may include a third surface 320a and a fourth surface 320b. The fourth surface 320b may be opposite to the third surface 320a. The third housing 330 may include a fifth surface 330a and a sixth surface 330b. The fifth surface 330a may be opposite to the sixth surface 330b. The first state 300a may be a state in which the first surface 310a, the third surface 320a, and the fifth surface 330a face substantially the same first direction (e.g., z-axis direction). The first state 300a is a state in which the first housing 310, the second housing 320, and the third housing 330 are unfolded, and may be referred to as an unfolded state. In the first state 300a, the first housing 310, the second housing 320, and the third housing 330 may be substantially planar. For example, the first surface 310a, the third surface 320a, and the fifth surface 330a may form a flat surface as the first housing 310, the second housing 320, and the third housing 330 substantially include a flat surface.

According to an embodiment, the electronic device 101 may further include first hinge structures 302a and 302b and second hinge structures 303a and 303b. The first hinge structures 302a and 302b may be disposed between the first housing 310 and the second housing 320. The first hinge structures 302a and 302b may rotatably connect the second housing 320 with respect to the first housing 310. For example, through the first hinge structures 302a and 302b, the second housing 320 may rotate about a first folding axis f1 in a first rotation direction (e.g., a clockwise direction) with respect to the first housing 310. For example, the first hinge structures 302a and 302b may rotate clockwise while changing from the first state 300a to a second state 300b. At least one first hinge structure 302b of the first hinge structures 302a and 302b may be connected to the first actuator 250. The first actuator 250 may be configured to transmit a rotational force to one of a plurality of gears in one hinge structure of the first hinge structures 302a and 302b. For example, the first actuator 250 may be coupled to a gear shaft included in one first hinge structure 302b.

According to an embodiment, the second hinge structures 303a and 303b may be disposed between the first housing 310 and the third housing 330. The second hinge structures 303a and 303b may rotatably connect the third housing 330 with respect to the first housing 310. For example, through the second hinge structures 303a and 303b, the third housing 330 may rotate about a second folding axis f2 in a second rotation direction (e.g., a counterclockwise direction) with respect to the first housing 310. For example, the second hinge structures 303a and 303b may rotate counterclockwise while changing from the first state 300a to the second state 300b. At least one second hinge structure 303b of the second hinge structures 303a and 303b may be connected to the second actuator 260. The second actuator 260 may be configured to transmit a rotational force to one of a plurality of gears in one hinge structure of the second hinge structures 303a and 303b. For example, the second actuator 260 may be coupled to a gear shaft included in one second hinge structure 303b. The first actuator 250 may be configured to control operations of the first hinge structures 302a and 302b. For example, even though the first actuator 250 is connected to one (e.g., the hinge structure 302b) of the first hinge structures 302a and 302b, the first actuator 250 may control the operation of the other one (e.g., the hinge structure 302a) of the first hinge structures 302a and 302b. One hinge structure 302b of the first hinge structures 302a and 302b may be related to the other hinge structure 302a of the first hinge structures 302a and 302b. For example, the first hinge structures 302a and 302b may share an axis or may be connected by a structure. The first hinge structures 302a and 302b connected to each other or sharing an axis may rotate the other hinge structure, based on the rotation of one hinge structure. Similar to the first actuator 250, the second actuator 260 may be configured to control operations of the second hinge structures 303a and 303b. For example, even though the second actuator 260 is connected to one (e.g., the hinge structure 303b) of the second hinge structures 303a and 303b, the second actuator 260 may control the operation of the other one (e.g., the hinge structure 303a) of the second hinge structures 303a and 303b.

The first hinge structures 302a and 302b and the second hinge structures 303a and 303b may have substantially the same structure. The hinge structures 302 and 303 may include a plurality of gears 351, 352, 353, and 354. Each of the plurality of gears 351, 352, 353, and 354 may be rotatably coupled to a gear shaft 359. The actuators 250 and 260 may be connected to the gear shaft 359 to rotate the gear shaft 359. One gear (e.g., the gear 351) of the plurality of gears 351, 352, 353, and 354 may rotate with rotation of the gear shaft 359. With the rotation of the gear 351, the remaining gears 352, 353, and 354 may also rotate. As the plurality of gears 351, 352, 353, and 354 rotate, the posture of the electronic device 101 may be changed.

According to an embodiment, the first hinge structures 302a and 302b may be surrounded by a first hinge cover 350. One 302a of the first hinge structures 302a and 302b may be disposed at one end of the first hinge cover 350, and the other 302b may be disposed at the other end of the first hinge cover 350. The second hinge structures 303a and 303b may be surrounded by a second hinge cover 360. One 303a of the second hinge structures 303a and 303b may be disposed at one end of the second hinge cover 360, and the other 303b may be disposed at the other end of the second hinge cover 360.

According to an embodiment, the electronic device 101 may further include a flexible display 230. The flexible display 230 may be arranged on one surface formed by the first housing 310, the second housing 320, and the third housing 330. The flexible display 230 may be disposed on the first surface 310a, the third surface 320a, and the fifth surface 330a. The flexible display 230 may include a first display area 230a, a second display area 230b, and a third display area 230c. The first display area 230a may be disposed on the first surface 310a of the first housing 310. The first display area 230a may be an area that is coupled to the first surface 310a so that it is not deformed. The second display area 230b may be disposed on the third surface 320a of the second housing 320. The second display area 230b may be an area that is coupled to the third surface 320a so that it is not deformed. The third display area 230c may be disposed on the fifth surface 330a of the third housing 330. The third display area 230c may be an area that is coupled to the fifth surface 330a so that it is not deformed. The first display area 230a, the second display area 230b, and the third display area 230c may be referred to as a flat area having a flat surface.

According to an embodiment, the flexible display 230 may further include a fourth display area 230d and a fifth display area 230e. The fourth display area 230d may be disposed on the first hinge cover 350. The fourth display area 230d may be coupled to the first hinge cover 350 or the first hinge structures 302a and 302b. For example, the fourth display area 230d may be supported by a hinge plate (not shown) included in the first hinge structures 302a and 302b. The fourth display area 230d may be deformed, as the second housing 320 rotates about the first folding axis f1 with respect to the first housing 310.

According to an embodiment, the fifth display area 230e may be disposed on the second hinge cover 360. The fifth display area 230e may be coupled to the second hinge cover 360 or the second hinge structures 303a and 303b. For example, the fifth display area 230e may be supported by a hinge plate (not shown) included in the second hinge structures 303a and 303b. The fifth display area 230e may be deformed, as the third housing 330 rotates about the second folding axis f2 with respect to the first housing 310.

According to an embodiment, an area of the fourth display area 230d may be larger than an area of the fifth display area 230e. For example, a first distance d1, which is a width of the fourth display area 230d, may be larger than a second distance d2, which is a width of the fifth display area 230e. When the electronic device 101 is changed to the folding state, the radius of curvature of the fourth display area 230d may be greater than the radius of curvature of the fifth display area 230e.

According to an embodiment, the electronic device 101 may be folded in the second state 300b. The second state 300b may be a state in which at least one of the first surface 310a, the third surface 320a, and the fifth surface 330a faces a different direction. In the second state 300b, the second surface 310b and the sixth surface 330b of the electronic device 101 may face the outside. In the second state, directions in which the second surface 310b and the sixth surface 330b face may be different from each other. In the second state 300b, the direction in which the second surface 310b faces may be opposite to the direction in which the sixth surface 330b faces. The third display area 230c corresponding to the fifth surface 330a may face substantially the same direction as the direction (e.g., -z-axis direction) in which the second display area 230b corresponding to the third surface 320a faces. The third display area 230c may face a direction different from the direction in which the first display area 230a corresponding to the first surface 310a faces. For example, the direction in which the third display area 230c faces (e.g., - z-axis direction) may be opposite to the direction in which the first display area 230a faces (e.g., +z-axis direction). The third display area 230c may face the first display area 230a. The second state 300b may be referred to as a folding state in that the first housing 310, the second housing 320, and the third housing 330 are folded together. In the second state 300b, the first housing 310, the second housing 320, and the third housing 330 may face each other. For example, in the second state 300b, the first housing 310, the third housing 330, and the second housing 320 may be stacked in the first direction (e.g., z-axis direction).

According to an embodiment, while changing from the first state 300a to the second state 300b, the second housing 320 may rotate about the first folding axis f1 with respect to the first housing 310, through the first hinge structure 302. In the second state 300b, the second housing 320 may be folded to face the third housing 330. For example, in the second state 300b, the second display area 230b disposed in the second housing 320 may face the sixth surface 330b of the third housing 330.

According to an embodiment, the third housing 330 may rotate about the second folding axis f2 with respect to the first housing 310, through the second hinge structure 303. In the second state 300b, the third housing 330 may be folded to face the first housing 310. For example, in the second state 300b, the third display area 230c disposed in the third housing 330 may face the first display area 230a disposed in the first housing 310. The side surface 332 of the third housing 330 may face the fourth display area 230d.

According to an embodiment, when the flexible display 230 is viewed from above in the first state 300a, an overlapping area between the flexible display 230 and the first hinge cover 350 may be larger than the overlapping area between the flexible display 230 and the second hinge cover 360. The first distance d1, which is a width of the first hinge cover 350 corresponding to the fourth display area 230d, may be larger than the second distance d2, which is a width of the second hinge cover 360 corresponding to the fifth display area 230e. In the second state 300b, a difference between the first distance d1 and the second distance d2 may correspond to a thickness of the second housing 320.

According to an embodiment, a first foldable housing among the second housing 320 and the third housing 330 may be determined based on the difference between the first distance d1 and the second distance d2. For example, the third housing 330 may first rotate about the second folding axis f2 with respect to the first housing 310. After the third housing 330 has been folded, the second housing 320 may rotate about the first folding axis f1 with respect to the first housing 310. As the width of the second hinge cover 360 is narrower than the width of the first hinge cover 350, the third housing 330 may be folded to face the first housing 310. As the width of the first hinge cover 350 is wider than the width of the second hinge cover 360, the second housing 320 may be folded to face the sixth surface 330b of the third housing 330.

The electronic device 101 according to the above-described embodiment may include hinge structures in a plurality of hinge covers 350 and 360, thereby providing the flexible display 230 that can be folded at least once. Through different widths of the hinge covers 350 and 360, the flexible display 230 may be folded several times.

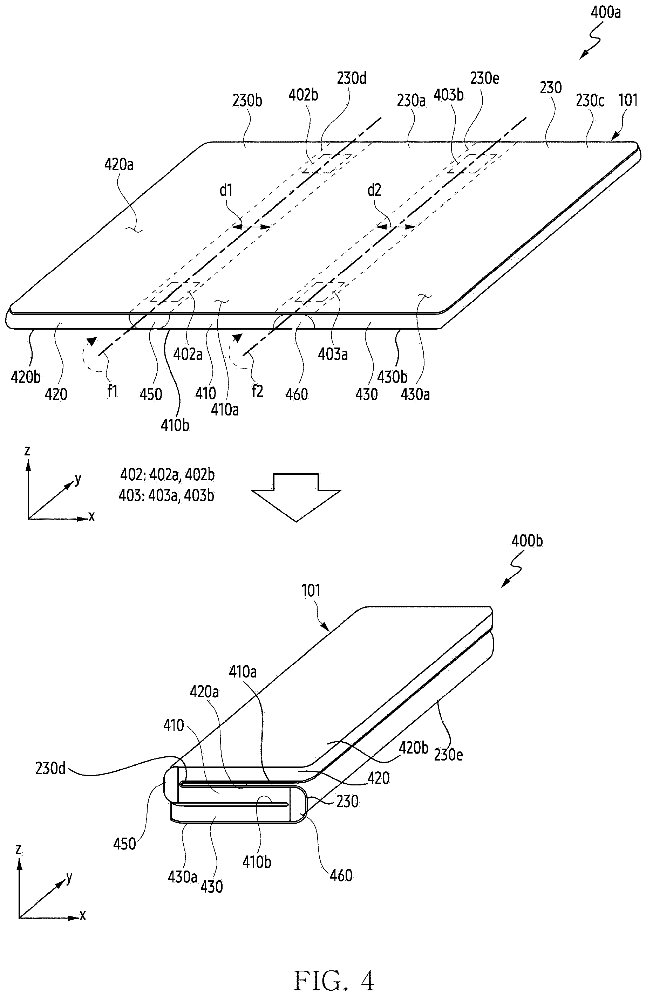

According to an embodiment, the electronic device 101 may be an electronic device having a second shape in which the flexible display 230 is exposed through one housing of the electronic device in the second state. For example, the second shape may be illustrated with the description of FIG. 4.

FIG. 4 illustrates a plurality of states of an electronic device having a second shape according to an embodiment.

Referring to FIG. 4, the electronic device 101 may include a first housing 410, a second housing 420, and a third housing 430. The electronic device 101 may be unfolded in a first state 400a. The first housing 410 may include a first surface 410a and a second surface 410b. The second surface 410b may be opposite to the first surface 410a. The second housing 420 may include a third surface 420a and a fourth surface 420b. The fourth surface 420b may be opposite to the third surface 420a. The third housing 430 may include a fifth surface 430a and a sixth surface 430b. The fifth surface 430a may be opposite to the sixth surface 430b. The first state 400a may be a state in which the first surface 410a, the third surface 420a, and the fifth surface 430a face substantially the same first direction (e.g., z-axis direction). The first state 400a is a state in which the first housing 410, the second housing 420, and the third housing 430 are unfolded, and may be referred to as an unfolded state. In the first state 400a, the first housing 410, the second housing 420, and the third housing 430 may be substantially flat. For example, the first surface 410a, the third surface 420a, and the fifth surface 430a may form a flat surface, as the first housing 410, the second housing 420, and the third housing 430 substantially include a flat surface.

According to an embodiment, the electronic device 101 may further include first hinge structures 402a and 402b and second hinge structures 403a and 403b. The first hinge structures 402a and 402b may be disposed between the first housing 410 and the second housing 420. The first hinge structures 402a and 402b may rotatably connect the second housing 420 with respect to the first housing 410. For example, through the first hinge structures 402a and 402b, the second housing 420 may rotate about the first folding axis f1 in the first rotation direction (e.g., the clockwise direction of FIG. 4) with respect to the first housing 410.

According to an embodiment, the second hinge structures 403a and 403b may be disposed between the first housing 410 and the third housing 430. The second hinge structures 403a and 403b may rotatably connect the third housing 430 with respect to the first housing 410. For example, through the second hinge structures 403a and 403b, the third housing 430 may rotate about the second folding axis f2 in the first rotation direction (e.g., the clockwise direction of FIG. 4) with respect to the first housing 410.

According to an embodiment, while changing from the first state 400a to a second state 400b, the second housing 420 may rotate about the first folding axis f1 with respect to the first housing 410, through the first hinge structure 402. In the second state 400b, the second housing 420 may be folded to face the first housing 410. For example, in the second state 400b, the second display area 230b disposed in the second housing 420 may face the first display area 230a disposed in the first housing 410. According to an embodiment, the third housing 430 may rotate about the second folding axis f2 with respect to the first housing 410, through the second hinge structure 403. In the second state 400b, the third housing 430 may be folded to face the first housing 410. For example, in the second state 400b, the sixth surface 430b of the third housing 330 may face the second surface 410b of the first housing 410.

According to an embodiment, as the first hinge structures 402a and 402b and the second hinge structures 403a and 430b rotate in the same direction (e.g., the clockwise direction), in the second state 400b, a portion of the flexible display 230 may be exposed to the outside, and the remaining portion may be covered by those housings.

According to an embodiment, the electronic device 101 may further include a flexible display 230. The flexible display 230 may be disposed on one surface formed by the first housing 310, the second housing 320, and the third housing 330. The flexible display 230 may be arranged on the first surface 410a, the third surface 420a, and the fifth surface 430a. The flexible display 230 may further include a first display area 230a, a second display area 230b, a third display area 230c, a fourth display area 230d, and a fifth display area 230e. The first display area 230a, the second display area 230b, and the third display area 230c may be substantially the same as or similar to FIG. 3.

According to an embodiment, the fourth display area 230d disposed on a first hinge cover 450 may be surrounded with the first housing 410 and the second housing 420 in the second state 400b, by the second housing 420 rotated in the first rotation direction (e.g., the clockwise direction of FIG. 4) about the first folding axis f1 with respect to the first housing 410. The fifth display area 230e disposed on the second hinge cover 460 may be exposed to the outside by the third housing 430 rotated in the first rotation direction (e.g., the clockwise direction of FIG. 4) with respect to the first housing 410. According to an embodiment, an area of the fourth display area 230d may be substantially the same as an area of the fifth display area 230e. For example, the first distance d1, which is a width of the fourth display area 230d, may be substantially the same as the second distance d2, which is a width of the fifth display area 230e. When the electronic device 101 is changed to a folding state, a radius of curvature of the fourth display area 230d may be substantially the same as a radius of curvature of the fifth display area 230e.

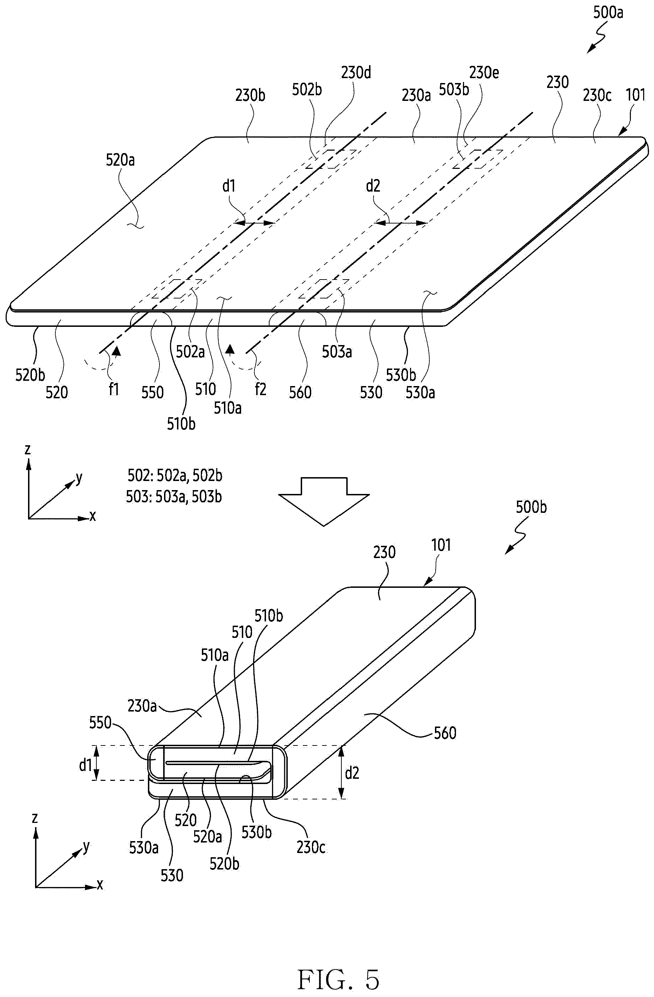

According to an embodiment, the electronic device 101 may be an electronic device having a third shape in which the flexible display 230 is exposed through two housings of the electronic device, in the second state. For example, the third shape may be illustrated with the description of FIG. 5.

FIG. 5 illustrates a plurality of states of an electronic device having a third shape according to an embodiment.

Referring to FIG. 5, the electronic device 101 may include a first housing 510, a second housing 520, and a third housing 530. The electronic device 101 may be unfolded in the first state 500a. The first housing 510 may include a first surface 510a and a second surface 510b. The second surface 510b may be opposite to the first surface 510a. The second housing 520 may include a third surface 520a and a fourth surface 520b. The fourth surface 520b may be opposite to the third surface 520a. The third housing 530 may include a fifth surface 530a and a sixth surface 530b. The fifth surface 530a may be opposite to the sixth surface 530b. A first state 500a may be a state in which the first surface 510a, the third surface 520a, and the fifth surface 530a face substantially the same first direction (e.g., z-axis direction). The first state 500a is a state in which the first housing 510, the second housing 520, and the third housing 530 are unfolded, and may be referred to as an unfolded state. In the first state 500a, the first housing 510, the second housing 520, and the third housing 530 may be substantially flat. For example, the first surface 510a, the third surface 520a, and the fifth surface 530a may form a flat surface, as the first housing 510, the second housing 520, and the third housing 530 include a substantially flat surface.

According to an embodiment, the electronic device 101 may further include first hinge structures 502a and 502b and second hinge structures 503a and 503b. The first hinge structures 502a and 502b may be disposed between the first housing 510 and the second housing 520. The first hinge structures 502a and 502b may rotatably connect the second housing 520 with respect to the first housing 510. For example, through the first hinge structures 502a and 502b, the second housing 520 may rotate about the first folding axis f1 in the first rotation direction (e.g., a counterclockwise direction of FIG. 5) with respect to the first housing 510.

According to an embodiment, the second hinge structures 503a and 503b may be disposed between the first housing 510 and the third housing 530. The second hinge structures 503a and 503b may rotatably connect the third housing 530 with respect to the first housing 510. For example, through the second hinge structures 503a and 503b, the third housing 530 may rotate about the second folding axis f2 in the second rotation direction (e.g., the clockwise direction of FIG. 5) with respect to the first housing 510.

According to an embodiment, as the first hinge structures 502a and 502b and the second hinge structures 503a and 530b rotate in different directions, the flexible display 230 may be exposed to the outside in the second state 500b.

According to an embodiment, in the second state 500b, the first display area 230a, the third display area 230c, the fourth display area 230d, and the fifth display area 230e of the flexible display 230 may be exposed to the outside.

According to an embodiment, the first display area 230a, the second display area 230b, and the third display area 230c may be substantially the same as or similar to those of FIG. 3 or 4.

The flexible display 230 may further include a fourth display area 230d and a fifth display area 230e.

According to an embodiment, while changing from the first state 500a to the second state 500b, the second housing 520 may rotate about the first folding axis f1 with respect to the first housing 510 through the first hinge structure 502. In the second state 500b, the second housing 520 may face the first housing 510. According to an embodiment, the third housing 530 may rotate about the second folding axis f2 with respect to the first housing 510 through the second hinge structure 503. In the second state 500b, the third housing 530 may face the second housing 520. For example, in the second state 500b, the third housing 530 may face the second display area 230b disposed in the second housing 520.

According to an embodiment, in the second state 500b, a portion of the flexible display 230 disposed on the first surface 510a, the fifth surface 530a, the first hinge structures 502a and 502b, and the second hinge structures 503a and 503b may be exposed to the outside. For example, in the second state 500b, the first display area 230a, the third display area 230c, the fourth display area 230d, and the fifth display area 230e of the flexible display 230 may be exposed to the outside. The fourth display area 230d disposed on the first hinge cover 550 may be exposed to the outside, in the second state 500b, by the second housing 520 rotated in the first rotation direction about the first folding axis f1 with respect to the first housing 510. The fifth display area 230e disposed on the second hinge cover 560 may be exposed to the outside, in the second state 500b, by the third housing 530 rotated in the second rotation direction with respect to the first housing 510. According to an embodiment, a first foldable housing between the second housing 520 and the third housing 530 may be determined based on a difference between the first distance d1 and the second distance d2. For example, the second housing 520 may first rotate about the first folding axis f1 with respect to the first housing 510. After the second housing 520 has been folded, the third housing 530 may rotate about the second folding axis f2 with respect to the first housing 510. As a width of the first hinge cover 550 is narrower than a width of the second hinge cover 560, the second housing 520 may be folded to face the first housing 510. As the width of the second hinge cover 560 is wider than the width of the first hinge cover 550, the third housing 530 may be folded to face the third surface 520a of the second housing 520.

Referring back to FIG. 2, the first state may be changed to the second state. For example, the first state (or the second state) may be changed to the second state (or the first state) via one or more intermediate states in between the first state and the second state. The first state and the second posture of the electronic device 101 may be different depending upon the first shape of FIG. 3, the second shape of FIG. 4, or the third shape of FIG. 5 described above.

For example, the electronic device 101 may change the first state (or the second state) to the second state (or the first state), based on a predefined user input.

For example, the first state (or the second state) may be changed to the second state (or the first state), in response to a user input to a physical button exposed through a portion of the first housing (310, 320, 330), or a portion of the second housing (320, 420, 520) or the third housing (330, 430, 530). For example, the first state (or the second state) may be changed to the second state (or the first state), in response to a touch input to an executable object displayed in the display area. For example, the first state (or the second state) may be changed to the second state (or the first state), in response to a touch input having a contact point on the display area and having a pressing strength greater than or equal to a reference strength. For example, the first state (or the second state) may be changed to the second state (or the first state), in response to a voice input received via a microphone of the electronic device 101. For example, the first state (or the second state) may be changed to the second state (or the first state), in response to an external force applied to the first hinge structure (302, 402, 502) to rotate the second housing (320, 420, 520) with respect to the first housing (310, 410, 510) and the second hinge structure (303, 403, 503) to rotate the third housing (330, 430, 530) with respect to the first housing (310, 410, 510). For example, the first state (or the second state) may be changed to the second state (or the first state), in response to a user input identified by an external electronic device (e.g., earbuds or a smart watch) connected to the electronic device 101. However, the disclosure is not limited thereto.

According to an embodiment, in response to a predefined user input, the electronic device 101 may drive the first actuator 250 and the second actuator 260, and the first state (or the second state) may be changed to the second state (or the first state). The first actuator 250 may be connected to a shaft in the first hinge structures (302, 402, 502) to rotate a gear. With the rotation of the gear, the second housing (320, 420, 520) connected to the first hinge structure (302, 402, 502) may rotate with respect to the first housing (310, 410, 510). The second actuator 260 may be connected to a shaft in the second hinge structure (303, 403, 503) to rotate a gear. Through the rotation of the gear, the third housing (330, 430, 530) connected to the second hinge structure (303, 403, 503) may rotate with respect to the first housing (310, 410, 510).

According to an embodiment, the first actuator 250 and the second actuator 260 may be actuators capable of providing a rotational force. For example, the first actuator 250 and the second actuator 260 may be a motor, a step motor, or a servo motor having a rotating shaft. However, the disclosure is not limited thereto, and the first actuator 250 and the second actuator 260 may be actuators capable of transmitting a rotational force to the first hinge structure (302, 402, 502) or the second hinge structure (303, 403, 503).

According to an embodiment, a plurality of sensors 240 may identify a posture or a posture of the electronic device 101. The plurality of sensors 240 may generate an electrical signal or a data value corresponding to the identified state or posture. According to an embodiment, the plurality of sensors 240 may include, for example, a gyro sensor, an acceleration sensor, a proximity sensor, or a Hall sensor. The processor 120 may acquire data on the posture of the electronic device 101 through the plurality of sensors 240.

According to an embodiment, the processor 120 may obtain first data related to the posture of the second housing (320, 420, 520) through a sensor disposed in the second housing (320, 420, 520) among the plurality of sensors 240. For example, the sensor in the second housing (320, 420, 520) may be a sensor capable of obtaining sensing data related to the posture of the second housing (320, 420, 520). For example, the sensor in the second housing (320, 420, 520) may obtain data related to an angle between the first housing (310, 410, 510) and the second housing (320, 420, 520).

According to an embodiment, the processor 120 may obtain second data related to the posture of the third housing (330, 430, 530) through a sensor disposed in the third housing (330, 430, 530) among the plurality of sensors 240. The sensor in the third housing (330, 430, 530) may be a sensor capable of obtaining sensing data related to the posture of the third housing (330, 430, 530). For example, the sensors in the third housing (330, 430, 530) may obtain data related to the angle between the first housing 310 and the third housing 330.

According to an embodiment, the plurality of sensors 240 may obtain data related to a detected distance, angle, posture, or change in magnetic field. Based on the distance, angle, posture, or change in the magnetic field, the processor 120 may identify the angle between the first housing (310, 410, 510) and the second housing (320, 420, 520) and the angle between the first housing (310, 410, 510) and the third housing (330, 430, 530).

According to an embodiment, the processor 120 may receive a user input related to the posture of the electronic device 101. The processor 120 may receive a user input indicating that the second state (300b, 400b, 500b) including the flexible display 230 at least partially covered by the second housing (320, 420, 520) and the third housing (330, 430, 530) is changed to the first state (300a, 400a, 500a) including the flexible display 230 exposed to the outside.

According to an embodiment, the processor 120 may identify a reference posture corresponding to the posture of the electronic device 101. In response to the user input, the processor 120 may identify a reference posture corresponding to the posture of the electronic device 101 identified through the plurality of sensors 240 from among a plurality of reference postures predetermined with respect to the first states 300a, 400a, or 500a. Identifying of the reference posture corresponding to the posture of the electronic device 101 may be performed before receiving the user input. The meaning of identifying may include selecting the reference posture corresponding to the posture of the electronic device 101 from among the plurality of reference postures, after receiving the user input. The meaning of identifying may include loading data on the reference posture selected from the plurality of reference postures to identify a reference driving scheme. The meaning of identifying may mean checking.

According to an embodiment, the reference posture may be identified based on a plane facing the direction of gravity identified through the plurality of sensors 240. In response to the user input, when the posture of the electronic device 101 identified through the plurality of sensors 240 for the first states (300a, 400a, 500a) is different from the predetermined plurality of reference postures, the processor 120 may be configured to provide the user with a notification related to the posture of the electronic device 101.

According to an embodiment, the posture of the electronic device may be related to the arrangement of the electronic device identified through the plurality of sensors 240. For example, the processor 120 may identify the direction in which the electronic device 101 faces through the plurality of sensors 240. For example, the posture of the electronic device with respect to a bottom surface supporting the electronic device 101 may be defined based on the position of the electronic device 101 in contact with the bottom surface. The reference postures may be postures of then electronic device in which the electronic device is stably supported on the bottom surface. For example, the reference postures may be postures in which one surface of the electronic device is supported on the bottom surface. For example, the postures of the electronic device may include a state in which the support surface and the electronic device are in line contact with each other and a state in which the support surface and the electronic device 101 are in surface contact with each other. The reference postures may include, among postures of the electronic device, a surface-to-surface contact state, which is a state of being stably supported on the support surface.

According to an embodiment, the processor 120 may identify a reference driving scheme corresponding to the reference posture among a plurality of reference driving schemes. Identifying the reference driving scheme may include selecting a reference driving scheme corresponding to the reference posture. Identifying the reference driving scheme based on the reference posture may be an example of implementation for a state conversion of the electronic device. The reference driving schemes may be a driving sequence and a driving scheme of the first actuator 250 and/or the second actuator 260 assigned to each of the plurality of reference postures. For example, when changing the electronic device from the first state to the second state, the reference driving schemes may include a sequence and a scheme of the electronic device being changed from the posture corresponding to the first state among the plurality of reference postures to the second state. The second state may be a state in which the flexible display 230 is arranged to face the user in the unfolded state. For example, in the unfolded state, the second state may be a state in which the flexible display 230 is disposed on a surface opposite to the surface of the electronic device 101 that is in contact with the support surface supporting the electronic device 101.

According to an embodiment, the processor 120 may be configured to change the first state (or the second state) to the second state (or the first state), based on controlling the first actuator 250 and/or the second actuator 260 according to the reference driving scheme.

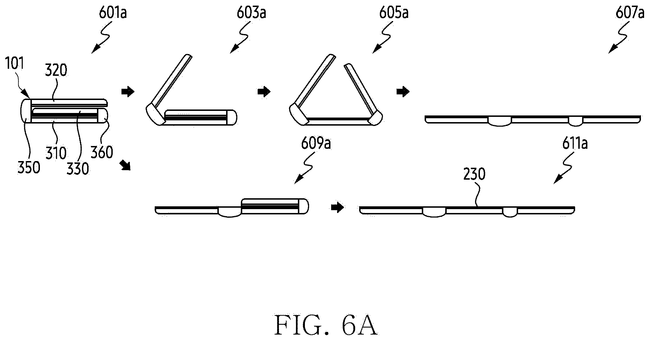

According to an embodiment, the electronic device 101 may store the reference postures and the reference driving scheme of the first shape. The reference postures and the reference driving schemes of the first shape of the electronic device 101 (e.g., the electronic device 101 of FIG. 3) may be illustrated with reference to FIGS. 6A to 6D.

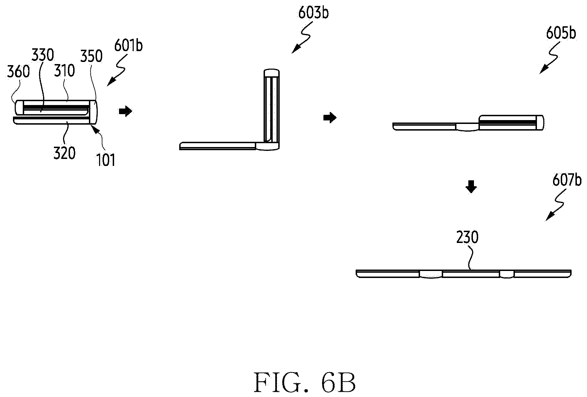

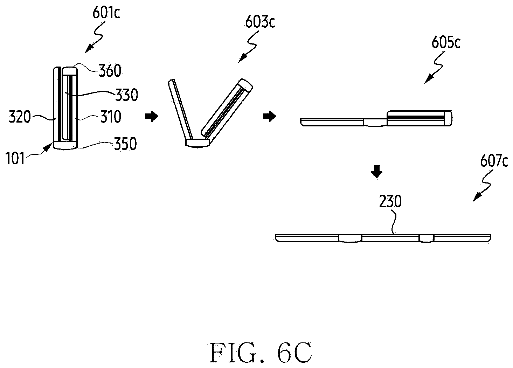

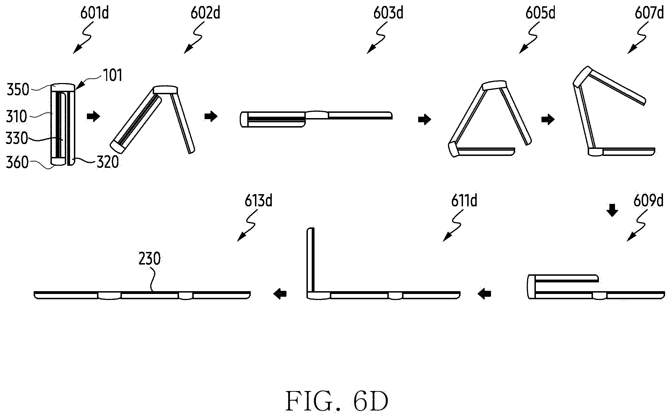

FIGS. 6A, 6B, 6C, and 6D illustrate unfolding operations according to postures of an electronic device having a first shape according to an embodiment.

The posture of the electronic device 101 in a state 601a in FIG. 6A may be a first reference posture. The posture of the electronic device 101 in a state 601b in FIG. 6B may be a second reference posture. The posture of the electronic device 101 in a state 601c of FIG. 6C may be a third reference posture. The posture of the electronic device 101 in a state 601d of FIG. 6D may be a fourth reference posture. A plurality of reference postures may include the first reference posture, the second reference posture, the third reference posture, and the fourth reference posture as described above.

According to an embodiment, the processor 120 may identify the posture of the electronic device 101 through a plurality of sensors 240. For example, the processor 120 may identify a side facing the direction of gravity, using an acceleration sensor and/or a gyro sensor of the plurality of sensors 240. When the processor 120 identifies that the side facing the direction of gravity is one surface (e.g., the second surface 310b) of the first housing 310, the processor 120 may identify that the posture of the electronic device 101 is the first reference posture. For example, the first reference posture may be a state supported by a structure contacting the second surface (e.g., the second surface 310b of FIG. 3).

Referring to FIG. 6A, the processor 120 may change the posture of the electronic device 101 according to the reference driving scheme shown in FIG. 6A, based on the first reference posture which is a posture of the electronic device 101. The reference driving scheme may include a driving sequence of the first actuator 250 and the second actuator 260, and a change in angle according to actuation of the first actuator 250 or the second actuator 260 in the driving sequence.

According to an embodiment, the processor 120 may change the electronic device 101 from the first state 300a to the second state 300b, by changing from the state 601a to the state 607a or changing from the state 601a to the state 611a. For example, the state 601a may be the second state 300b (e.g., a folding state). The state 607a and the state 611a may be the first state 300a (e.g., an unfolding state).

According to an embodiment, the processor 120 may drive the first actuator to drive the first hinge structure in the first hinge cover 350 to rotate the second housing 320 with respect to the first housing 310. For example, in the state 601a, the processor 120 may identify that the posture of the electronic device 101 is the first reference posture, through the plurality of sensors 240. The processor 120 may operate the first actuator 250 to change from the state 601a to the state 603a or the state 609a. For example, the processor 120 may drive the first hinge structure 350 through the first actuator 250. The processor 120 may rotate the second housing 320 with respect to the first housing 310 such that an angle between the first housing 310 and the second housing 320 reaches a specified angle.

According to an embodiment, in the state 603a or the state 609a, the angle between the first housing 310 and the second housing 320 may be a predetermined angle. The processor 120 may be configured to rotate the third housing 330 with respect to the first housing 310, in response to the angle between the first housing 310 and the second housing 320 matching the predetermined angle. For example, in the state 603a, when it is identified that the angle between the first housing 310 and the second housing 320 is the predetermined angle (e.g., 60 degrees), the processor 120 may rotate the third housing 330 with respect to the first housing 310 using the second actuator 260, thereby changing into the state 605a. The predetermined angle may be an angle at which the second housing 320 may not be in contact with the third housing 330, while changing from the state 603a to the state 605a. The predetermined angle may be about 50 degrees to about 70 degrees.

According to an embodiment, in the state 605a, when it is identified that the angle between the third housing 330 and the first housing 310 is a predetermined angle, the processor 120 may rotate the second housing 320 and the third housing 330 with respect to the first housing 310 to change the electronic device 101 into the state 607a.

According to an embodiment, in the state 609a, when it is identified that the angle between the second housing 320 and the first housing 310 is approximately 180 degrees, the processor 120 may rotate the third housing 330 with respect to the first housing 310 to change the electronic device 101 into the state 611a.

According to an embodiment, in the state 607a and the state 611a, the electronic device 101 may provide the flexible display 230 arranged to face the user.

According to an embodiment, the operation of changing from the state 601a to the state 603a and the state 605a may be performed simultaneously. For example, the processor 120 may simultaneously operate the first actuator 250 and the second actuator 260 with a certain time difference. For example, when the angle between the second housing 320 and the first housing 310 reaches a specified angle, while rotating the second housing 320 in advance with the first actuator 250, the processor 120 may simultaneously drive the second actuator 260. By simultaneously driving the first actuator 250 and the second actuator 260, the electronic device 101 may reduce an operation time for changing from the state 601a (e.g., the second state 300b) to the state 607a (e.g., the first state 300a).

Referring to FIG. 6B, the processor 120 may change the posture of the electronic device 101 according to a reference driving scheme shown in FIG. 6B, based on the second reference posture which is a posture of the electronic device 101. The reference driving scheme may include a driving sequence of the first actuator 250 and the second actuator 260, and a change in angle according to actuation of the first actuator 250 or the second actuator 260 in the driving sequence.

According to an embodiment, the processor 120 may identify the posture of the electronic device 101 through the plurality of sensors 240. For example, the processor 120 may identify a plane facing the direction of gravity, using an acceleration sensor or a gyro sensor of the plurality of sensors 240. When it is identified that the plane facing the direction of gravity is one surface (e.g., the fourth surface 320b) of the second housing 320, the processor 120 may identify that the posture of the electronic device 101 is the second reference posture. For example, the second reference posture may be a state supported by a structure contacting the fourth surface (e.g., the fourth surface 320b of FIG. 3).

According to an embodiment, the processor 120 may change the posture of the electronic device 101 according to the reference driving scheme shown in FIG. 6B, based on the second reference posture which is a posture of the electronic device 101. The reference driving scheme may include a driving sequence of the first actuator 250 and the second actuator 260, and a change in angle according to driving of the first actuator 250 or driving of the second actuator 260 in the driving sequence.

According to an embodiment, the processor 120 may change the electronic device 101 from the second state 300b (e.g., the folding state) to the first state 300a (e.g., the unfolding state) by changing the electronic device 101 from the state 601b to the state 605b. For example, the state 601b may be the second state. The state 607b may be the first state.

According to an embodiment, the processor 120 may drive the first hinge structure in the first hinge cover 350 through the first actuator 250. The first actuator 250 may rotate the first housing 310 with respect to the second housing 320. The second housing 320 may be in contact with the structure, and the first housing 310 may rotate with respect to the second housing.

For example, in the state 601b, the processor 120 may identify that the posture of the electronic device 101 is the second reference posture in the first shape through the plurality of sensors 240. The processor 120 may operate the first actuator 250 to change from the state 601b to the state 605b. For example, the processor 120 may drive the first hinge structure in the first hinge cover 350 through the first actuator 250. The processor 120 may rotate the angle between the first housing 310 and the second housing 320 to a specified angle. The specified angle may be approximately 180 degrees. For example, the first surface 310a of the first housing 310 and the third surface 320a of the second housing 320 may be substantially the same plane. The second surface 310b of the first housing 310 and the fourth surface 320b of the second housing 320 may be substantially the same plane. The state 603b may be an intermediate state between the state 601b and the state 605b. The state 603b may be one of states in which the angle between the first housing 310 and the second housing 320 exceeds 0 degrees and is less than approximately 180 degrees.

According to an embodiment, when it is identified that the angle between the second housing 320 and the first housing 310 is approximately 180 degrees, in the state 605b, the processor 120 may rotate the third housing 330 with respect to the first housing 310 to change the electronic device 101 into the state 607b. In the state 607b, the electronic device 101 may provide the flexible display 230 arranged to face the user. The processor 120 may operate the second actuator 260 to rotate the third housing 330, while changing from the state 601b to the state 6035. By simultaneously driving the first actuator 250 and the second actuator 260, the electronic device 101 may reduce the operation time for changing from the state 601b to the state 607b.

Referring to FIG. 6C, the processor 120 may change the posture of the electronic device 101 according to the reference driving scheme shown in FIG. 6C, based on the third reference posture which is a posture of the electronic device 101. The reference driving scheme may include a driving sequence of the first actuator 250 and the second actuator 260, and a change in angle according to driving of the first actuator 250 or driving of the second actuator 260 in the driving sequence.

According to an embodiment, the processor 120 may identify the posture of the electronic device 101 through the plurality of sensors 240. For example, the processor 120 may identify a plane facing the direction of gravity, using an acceleration sensor or a gyro sensor of the plurality of sensors 240. Based on identifying that the plane facing the direction of gravity is the first hinge cover 350, the processor 120 may identify that the posture of the electronic device 101 is the third reference posture. For example, the third reference posture may be a state supported by a structure in contact with the first hinge cover 350.

According to an embodiment, the processor 120 may change the posture of the electronic device 101 according to the reference driving scheme shown in FIG. 6C, based on the third reference posture which is a posture of the electronic device 101. The reference driving scheme may include a driving sequence of the first actuator 250 and the second actuator 260 and a change in angle according to driving of the first actuator 250 or driving of the second actuator 260 in the driving sequence.

According to an embodiment, the processor 120 may change the electronic device 101 from the second state 300b (e.g., the folding state) to the first state 300a (e.g., the unfolding state), by changing the electronic device 101 from the state 601c to the state 607c. For example, the state 601c may be the second state 300b. The state 607c may be the first state 300a.

According to an embodiment, for stable support, the processor 120 may change the posture of the electronic device 101 from 601c such that the fourth surface 320b of the second housing 320 and the second surface 310b of the first housing 310 come into contact with the structure, as in the state 605c. The processor 120 may rotate the second housing 320 with respect to the first housing 310 through the first actuator 250, in the state 601c. The electronic device 101 may increase the angle between the first housing 310 and the second housing 320, while the first hinge structure 350 is supported by the structure. The electronic device 101 may be converted from the state 603c in which the first housing 310 and the second housing 320 move away from each other to the state 605c in which the first housing 310 and the second housing 320 form a substantially flat surface.

According to an embodiment, while being changed from the state 603c to the state 605c, the processor 120 may rotate the angle between the first housing 310 and the second housing 320 to a specified angle. The specified angle may be approximately 180 degrees. For example, the first surface 310a of the first housing 310 and the third surface 320a of the second housing 320 may be substantially the same plane. The second surface 310b of the first housing 310 and the fourth surface 320b of the second housing 320 may be substantially the same plane.

According to an embodiment, when it is identified that the angle between the second housing 320 and the first housing 310 is approximately 180 degrees, in the state 605c, the processor 120 may rotate the third housing 330 with respect to the first housing 310 to change the electronic device 101 to the state 607c. In the state 607c, the electronic device 101 may provide the flexible display 230 arranged to face the user. The processor 120 may operate the second actuator 260 to rotate the third housing 330, while changing from the state 601c to the state 605c. For example, the processor 120 may be configured to simultaneously operate the first actuator 250 and the second actuator 260, in the state 603c. By simultaneously driving the first actuator 250 and the second actuator 260, the electronic device 101 may reduce the operation time for changing from the state 601c to the state 607c.

According to an embodiment, the processor 120 may identify the posture of the electronic device 101 through the plurality of sensors 240. For example, the processor 120 may identify a plane facing the direction of gravity, using an acceleration sensor or a gyro sensor of the plurality of sensors 240. When the processor 120 identifies that the plane facing the direction of gravity is one surface of the second hinge cover 360, the processor 120 may identify that the posture of the electronic device 101 is the fourth reference posture. For example, the fourth reference posture may be a state supported by a structure in contact with the second hinge cover 360.

Referring to FIG. 6D, the processor 120 may change the posture of the electronic device 101 according to the reference driving scheme shown in FIG. 6D, based on the fourth reference posture which is a posture of the electronic device 101. The reference driving scheme may include a driving sequence of the first actuator 250 and the second actuator 260 and a change in angle according to driving of the first actuator 250 or driving of the second actuator 260 in the driving sequence.

According to an embodiment, the processor 120 may rotate the second housing 320 with respect to the first housing 310 through the first actuator 250, in the state 601d. The electronic device 101 may increase the angle between the first housing 310 and the second housing 320, while the second hinge cover 360 and a side of the second housing 320 are supported by the structure. The electronic device 101 may be changed from the state 602d in which the first housing 310 and the second housing 320 move away from each other, to the state 603d in which the first housing 310 and the second housing 320 form a substantially flat surface.

According to an embodiment, while changing from the state 602d to the state 603d, the processor 120 may rotate the angle between the first housing 310 and the second housing 320 to a specified angle. The specified angle may be approximately 180 degrees. For example, the first surface 310a of the first housing 310 and the third surface 320a of the second housing 320 may be substantially the same plane. The second surface 310b of the first housing 310 and the fourth surface 320b of the second housing 320 may be substantially the same plane. In a state 603d different from the state 605c of FIG. 6C, the third housing 330 may be in contact with a support surface of the structure. For example, the flexible display 230 exposed from the first housing 310 may be arranged to face a bottom.

According to an embodiment, in order to change from the state 603d to the state 613d in which the flexible display 230 is in the first state (e.g., the unfolded state) facing the user, the first housing 310 may be rotated with respect to the third housing 330 through the hinge structure in the second hinge cover 360. In order to prevent damage caused by unexpected movement due to the weight of the first housing 310 and the second housing 320, the states 605d to 611d may be further performed to disperse the weight.

According to an embodiment, the processor 120 may drive the first actuator 250 and the second actuator 260 to change from the state 603d to the state 609d. The processor 120 may fold the second housing 320 with respect to the first housing 310 through the first actuator 250, and may unfold the third housing 330 with respect to the first housing through the second actuator 260.

According to an embodiment, the electronic device 101 may be changed to the state 609d via the states 605d to 607d. Based on identifying that the angle between the first housing 310 and the third housing 330 is approximately 180 degrees, the processor 120 may unfold the second housing 320 with respect to the first housing 310. The electronic device 101 may be changed from the state 611d to the state 613d, which is the first state (e.g., the unfolded state), according to the unfolding operation of the second housing 320.

According to the above-described embodiment, the electronic device 101 may change an in-folding type of electronic device 101 to the first state 300a in which the flexible display 230 is arranged to face the user, based on the reference driving schemes according to a plurality of reference postures.

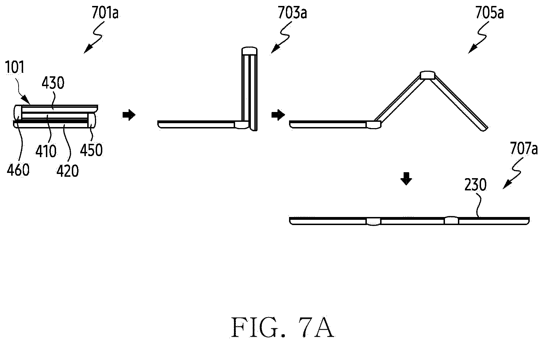

Referring back to FIG. 2, in a second shape, the electronic device 101 may store the reference postures and the reference driving scheme. The reference postures and the reference driving schemes of the second shape of electronic device 101 (e.g., the electronic device 101 of FIG. 4) may be illustrated with reference to FIGS. 7A to 7D.

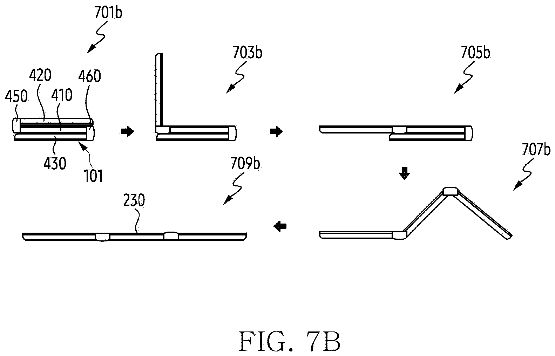

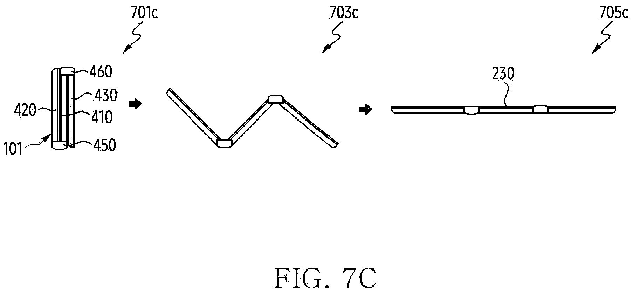

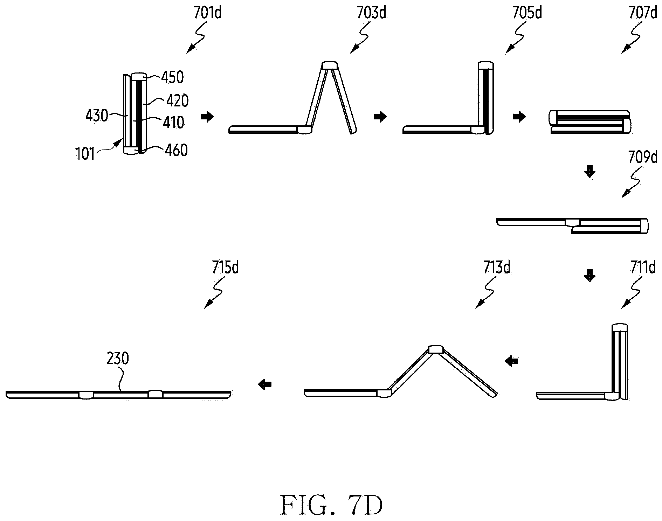

FIGS. 7A, 7B, 7C, and 7D illustrate an unfolding operation according to a posture of an electronic device having a second shape according to an embodiment.

The electronic device 101 having the second shape may include a plurality of reference postures. The posture of the electronic device 101 in a state 701a in FIG. 7A may be a first reference posture. The posture of the electronic device 101 in a state 701b in FIG. 7B may be a second reference posture. The posture of the electronic device 101 in a state 701c of FIG. 7C may be a third reference posture. The posture of the electronic device 101 in a state 701d in FIG. 7D may be a fourth reference posture. The plurality of reference postures may include the first reference posture, the second reference posture, the third reference posture, and the fourth reference posture described above.

Referring to FIG. 7A, in the state 701a of the electronic device 101, the third housing 430, the first housing 410, and the second housing 420 may be sequentially stacked. The state 701a may be the second state 400b of FIG. 4. In the folded state, the flexible display 230 may be disposed on the first hinge structure 450 and the second housing 420 to be exposed to the outside.

The processor 120 may identify the posture of the electronic device 101 with the plurality of sensors 240. For example, the processor 120 may identify a plane facing the direction of gravity, using an acceleration sensor or a gyro sensor of the plurality of sensors 240. When the processor 120 identifies that the plane facing the direction of gravity is one surface of the second housing 420, the processor 120 may identify that the posture of the electronic device 101 is the first reference posture. For example, the first reference posture may be a state supported by a structure contacting a fourth surface (e.g., the fourth surface 420b of FIG. 4).

Referring to FIG. 7A, the processor 120 may change the posture of the electronic device 101 according to the reference driving scheme shown in FIG. 7A, based on the first reference posture which is a posture of the electronic device 101. The reference driving scheme may include a driving sequence of the first actuator 250 and the second actuator 260 and a change in angle according to driving of the first actuator 250 or driving of the second actuator 260 in the driving sequence.

The processor 120 may change the electronic device 101 from the second state 400b (e.g., the folding state) to the first state 400a (e.g., the unfolding state), by changing the electronic device 101 from the state 701a to the state 707a. For example, the state 701a may be the second state. The state 707a may be the first state.

The processor 120 may drive the first actuator 250 to drive the first hinge structure in the first hinge cover 450 to rotate the second housing 430 with respect to the first housing 410. For example, in state 701a, the processor 120 may identify that the posture of the electronic device 101 is the first reference posture, through the plurality of sensors 240. The processor 120 may operate the first actuator 250 to change from the state 701a to the state 703a. For example, the processor 120 may drive the first hinge structure (e.g., the first hinge structures 402a and 402b of FIG. 4) in the first hinge cover 450 through the first actuator 250. The processor 120 may rotate the second housing 430 with respect to the first housing 410 such that the angle between the first housing 410 and the second housing 420 reaches a specified angle.

In the state 703a, the angle between the first housing 410 and the second housing 420 may be a predetermined angle (e.g., 90 degrees). The processor 120 may operate the first actuator 250 and the second actuator 260 in response to the angle between the first housing 410 and the third housing 430 matching the predetermined angle. The predetermined angle may be approximately 90 degrees. For example, based on identifying that the angle between the first housing 410 and the third housing 430 is approximately 90 degrees in the state 703a, the processor 120 may simultaneously drive the first actuator 250 and the second actuator 260.

The electronic device 101 may unfold the second housing 420 with respect to the first housing 410 according to the operation of the first actuator 250. The electronic device 101 may unfold the third housing 430 with respect to the first housing 410 according to the operation of the second actuator 260, while the first actuator 250 is being driven. The electronic device 101 may be changed to the first state 707a via the unfolded state 705a.

Referring to FIG. 7B, the processor 120 may change the posture of the electronic device 101 according to the reference driving scheme shown in FIG. 7B, based on the second reference posture which is a posture of the electronic device 101. The reference driving scheme may include a driving sequence of the first actuator 250 and the second actuator 260 and a change in angle according to driving of the first actuator 250 or driving of the second actuator 260 in the driving sequence.

The processor 120 may identify the posture of the electronic device 101 through the plurality of sensors 240. For example, the processor 120 may identify a plane facing the direction of gravity, using an acceleration sensor or a gyro sensor of the plurality of sensors 240. When the processor 120 identifies that the plane facing the direction of gravity is one surface of the third housing 430, the processor 120 may identify that the posture of the electronic device 101 is the second reference posture. For example, the second reference posture may be a state supported by a structure in contact with a fifth surface (e.g., the fifth surface 430a of FIG. 4). The second reference posture may be a state in which the third display area (e.g., the third display area 230c of FIG. 4) is in contact with the support surface of the structure.

The processor 120 may change the posture of the electronic device 101 according to the reference driving scheme shown in FIG. 7B, based on the second reference posture which is a posture of the electronic device 101. The reference driving scheme may include a driving sequence of the first actuator 250 and the second actuator 260 and a change in angle according to driving of the first actuator 250 or driving of the second actuator 260 in the driving sequence.

The processor 120 may change the electronic device 101 from the second state 400b to the first state 400a by changing the electronic device 101 from the state 701b to the state 707b. For example, the state 701b may be the second state. The state 709b may be the first state.

The processor 120 may drive the first actuator 250 to drive the first hinge structure in the first hinge cover 450 so as to rotate the second housing 420 with respect to the first housing 410. For example, in the state 701b, the processor 120 may identify that the posture of the electronic device 101 is the second reference posture, through the plurality of sensors 240. The processor 120 may operate the first actuator 250 to change from the state 701b to the state 705b. For example, the processor 120 may drive the first hinge structure (e.g., the first hinge structures 402a and 402b of FIG. 4) in the first hinge cover 450 through the first actuator 250. The processor 120 may rotate the second housing 420 with respect to the first housing 410 such that the angle between the first housing 410 and the second housing 420 reaches a specified angle (e.g., 180 degrees).

The electronic device 101 may change from the state 701b to the state 705b via the state 703b. The state 703b may be an intermediate step of changing to the state 705b. In the state 703b, the angle between the first housing 410 and the second housing 420 of the electronic device 101 may be in a range of 0 degrees to approximately 180 degrees.

In the state 705b, the angle between the first housing 410 and the second housing 420 may be a predetermined angle (e.g., 180 degrees). The processor 120 may operate the first actuator 250 and the second actuator 260 in response to the angle between the first housing 410 and the second housing 420 matching the predetermined angle. The predetermined angle may be approximately 180 degrees. For example, the first surface 410a of the first housing 410 and the third surface 420a of the second housing 420 may be substantially the same plane. The first surface 410a of the first housing 410 and the third surface 420a of the second housing 420 may be exposed toward the outside.

For example, based on identifying that the angle between the first housing 410 and the second housing 420 is approximately 180 degrees in the state 705b, the processor 120 may simultaneously drive the first actuator 250 and the second actuator 260.

In the state 705b, the first actuator 250 may fold the first housing 410 and the second housing 420 up to a specified angle (e.g., 145 degrees), and the second actuator 260 may unfold the first housing 410 and the third housing 430 up to a specified angle (e.g., 90 degrees).

The electronic device 101 may be changed to the state 707b in which each of the housings 410, 420, and 430 has a predetermined angle therebetween through the first actuator 250 and the second actuator 260.

In the state 707b, the processor 120 may identify a first angle between the first housing 410 and the second housing 420 and a second angle between the first housing 410 and the third housing 430. In response to identifying that the identified first angle reaches the predesignated angle (e.g., 145 degrees) and the identified second angle reaches the predesignated angle (e.g., 90 degrees), the processor 120 may change the operation of the first actuator 250 and the second actuator 260, thereby changing to the state 709b. For example, through the first actuator 250 and the second actuator 260, the first housing 410 and the second housing 420, and the first housing 410 and the third housing may be unfolded from each other.

Referring to FIG. 7C, the processor 120 may change the posture of the electronic device 101 according to the reference driving scheme shown in FIG. 7C, based on the third reference posture which is a posture of the electronic device 101. The reference driving scheme may include a driving sequence of the first actuator 250 and the second actuator 260 and a change in angle according to driving of the first actuator 250 or driving of the second actuator 260 in the driving sequence.

The processor 120 may identify the posture of the electronic device 101 through the plurality of sensors 240. For example, the processor 120 may identify a plane facing the direction of gravity, using an acceleration sensor or a gyro sensor of the plurality of sensors 240. Based on identifying that the plane facing the direction of gravity is the first hinge cover 450, the processor 120 may identify that the posture of the electronic device 101 is the third reference posture. For example, the third reference posture may be a state supported by a structure in contact with the first hinge cover 450.

The processor 120 may change the posture of the electronic device 101 according to the reference driving scheme shown in FIG. 7C, based on the third reference posture which is a posture of the electronic device 101. The reference driving scheme may include a driving sequence of the first actuator 250 and the second actuator 260 and a change in angle according to driving of the first actuator 250 or driving of the second actuator 260 in the driving sequence.

The processor 120 may change the electronic device 101 from the second state 400b to the first state 400a, by changing the electronic device 101 from the state 701c to the state 705c. For example, the state 701c may be the second state. The state 705c may be the first state.

In the state 701c, the processor 120 may rotate the second housing 420 with respect to the first housing 410 through the first actuator 250, and may rotate the third housing 430 with respect to the first housing 410 through the second actuator 260. The electronic device 101 may increase the angle between the first housing 410 and the second housing 420 and the angle between the first housing 410 and the third housing 430, while the first hinge structure 450 and the side of the third housing 430 are supported by the structure. The electronic device 101 may be changed from the state 703c, in which the first housing 410 and the second housing 420, and the first housing 410and the third housing 430 move away from each other part from each other therebetween, to the state 705c in which the first housing 410, the second housing 420, and the third housing 430 form a substantially flat surface. In state 705c, the electronic device 101 may provide the flexible display 230 arranged to face the user.

The processor 120 may identify the posture of the electronic device 101 through the plurality of sensors 240. For example, the processor 120 may identify a plane facing the direction of gravity using an acceleration sensor or a gyro sensor of the plurality of sensors 240. When the processor 120 identifies that the plane facing the direction of gravity is one surface of the second hinge cover 460, the processor 120 may identify that the posture of the electronic device 101 is the fourth reference posture. For example, the fourth reference posture may be a state supported by a structure in contact with the second hinge cover 460.

Referring to FIG. 7D, the processor 120 may change the posture of the electronic device 101 according to the reference driving scheme shown in FIG. 7D, based on the fourth reference posture which is a posture of the electronic device 101. The reference driving scheme may include a driving sequence of the first actuator 250 and the second actuator 260 and a change in angle according to driving of the first actuator 250 or driving of the second actuator 260 in the driving sequence.

In the state 701d, the processor 120 may drive the first actuator 250 and the second actuator 260 to change into the state 705d. In order to reduce the electronic device from being subjected to any unintended external impact, the processor 120 may be changed from the state 701d through the state 703d to the state 705d. The state 701d may be a folding posture of the electronic device 101 of the second shape. The state 703d may maintain a specified distance between the second housing 420 and the first housing 410 to prevent its falling, and may unfold the third housing 430 with respect to the first housing 410. When the third housing 430 (e.g., the fifth surface 430a of the third housing 430) comes into contact with the support surface of the structure, the second housing 420 and the first housing 410 may be folded as in the state 705d. When the processor 120 identifies that the posture of the electronic device 101 is the state 705d through the plurality of sensors 240, the processor 120 may rotate the third housing 420 with respect to the first housing 410 through the second actuator 260. For example, the processor 120 may fold the first housing 410 and the third housing 430 through the second actuator 260 to change from the state 705d to the state 707d.

The state 707d may be substantially the same as the state 701b of FIG. 7B. A state 709d, a state 711d, a state 713d, and a state 715d, following the state 707d, may be substantially the same as or similar to the state during the changing operations in the states 701b to 707b of FIG. 7B.

In the state 711d omitted from FIG. 7B, the angle between the first housing 410 and the second housing 420 may be rotated at a specified angle, through the first actuator 250, in order to stably support the electronic device. For example, the specified angle may be approximately 90 degrees. In response to identifying that the posture of the electronic device 101 is the state 711d, the processor 120 may simultaneously drive the first actuator 250 and the second actuator 260 to cause the electronic device 101 to be unfolded to the state 715d.

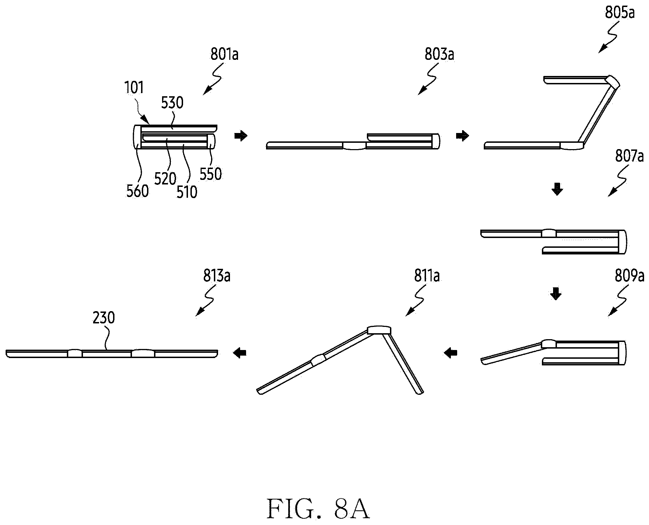

Referring back to FIG. 2, the electronic device 101 may store the reference postures and the reference driving scheme in the third shape. The reference postures and the reference driving schemes of the third type of electronic device 101 (e.g., the electronic device 101 of FIG. 5) may be illustrated with reference to FIGS. 8A to 8D.

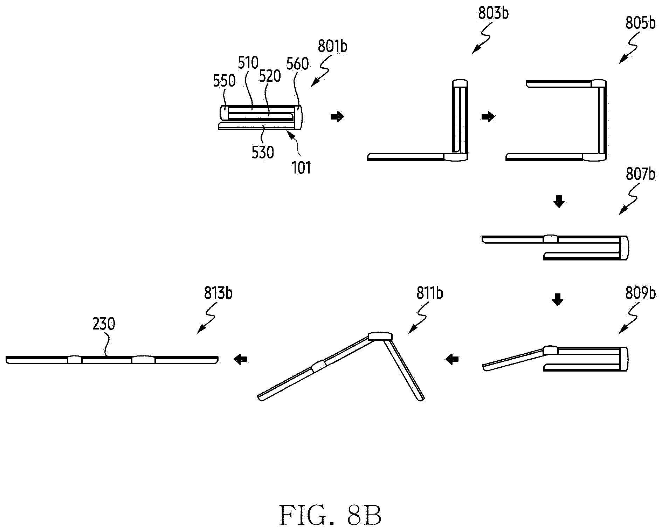

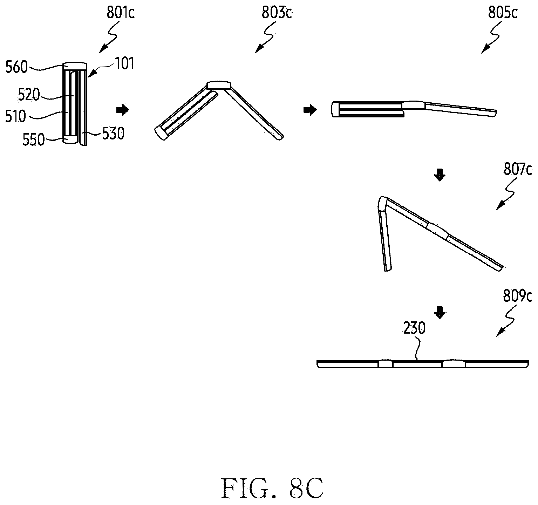

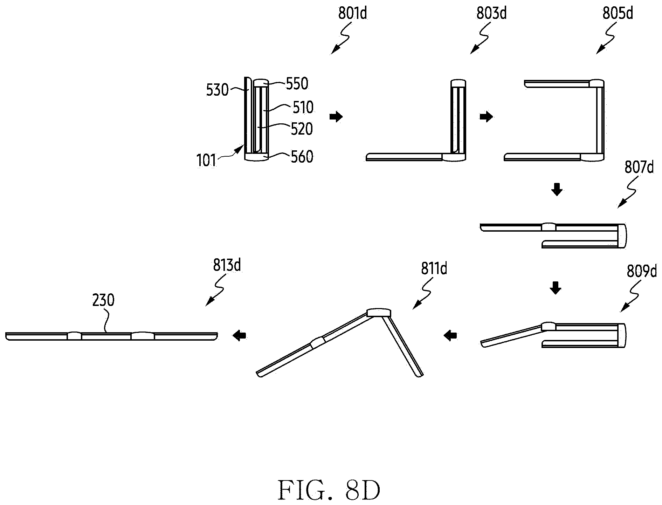

FIGS. 8A, 8B, 8C, and 8D illustrate an unfolding operation according to a posture of an electronic device having a third shape according to an embodiment.

The posture of the electronic device 101 in a state 601 in FIG. 8A may be a first reference posture. The posture of the electronic device 101 in a state 801b in FIG. 8B may be a second reference posture. The posture of the electronic device 101 in a state 801c of FIG. 8C may be a third reference posture. The posture of the electronic device 101 in a state 801d in FIG. 8D may be a fourth reference posture. A plurality of reference postures may include the first reference posture, the second reference posture, the third reference posture, and the fourth reference posture, as described above.

The processor 120 may identify the posture of the electronic device 101 through the plurality of sensors 240. For example, the processor 120 may identify a plane facing the direction of gravity using an acceleration sensor or a gyro sensor of the plurality of sensors 240. When the processor 120 identifies that the plane facing the direction of gravity is one surface of the first housing 510, the processor 120 may identify that the posture of the electronic device 101 is the first reference posture. For example, the first reference posture may be a state supported by a structure in contact with a first surface (e.g., the first surface 510a of FIG. 5) of the first housing 510.

Referring to FIG. 8A, the processor 120 may change the posture of the electronic device 101 according to the reference driving scheme shown in FIG. 8A, based on the first reference posture which is a posture of the electronic device 101. The reference driving scheme may include a driving sequence of the first actuator 250 and the second actuator 260 and a change in angle according to driving of the first actuator 250 or driving of the second actuator 260 in the driving sequence.

The processor 120 may change the electronic device 101 from the first state 500a to the second state 500b by changing from a state 801a to a state 813a. For example, the state 801a may be the second state 500b. The state 813a may be the first state 500a.

The processor 120 may drive the second actuator 260 to drive the second hinge structure in the second hinge cover 560 so as to rotate the third housing 530 with respect to the first housing 510. For example, in the state 801a, the processor 120 may identify that the posture of the electronic device 101 is the first reference posture, through the plurality of sensors 240. The processor 120 may operate the second actuator 260 to change from the state 801a to a state 803a. For example, the processor 120 may drive the second hinge structure in the second hinge cover 560 through the second driver 250. The processor 120 may rotate the third housing 530 with respect to the first housing 510 such that the angle between the first housing 510 and the third housing 530 reaches a specified angle.

In the state 803a, the angle between the first housing 510 and the third housing 530 may be a predetermined angle. The processor 120 may be configured to rotate the third housing 530 with respect to the first housing 510 and rotate the second housing 520 with respect to the first housing 510, in response to the angle between the first housing 510 and the third housing 530 matching the predetermined angle (e.g., 180 degrees). For example, in the state 803a, when it is identified that the angle between the first housing 510 and the third housing 530 is the predetermined angle (e.g., 180 degrees), the processor 120 may rotate the second housing 520 and the third housing 530 with respect to the first housing 510 to change the second housing 520 and the third housing 530 into a state 807a.

In the state 803a, the processor 120 may unfold the first housing 510 and the second housing 520 through the first actuator 250, and may fold the first housing 510 and the third housing 530 through the second actuator 260. The processor 120 may then change via the state 805a to the state 807a, using the first actuator 250 and the second actuator 260.

In the state 807a, when it is identified that the angle between the second housing 520 and the first housing 510 is approximately 180 degrees and the angle between the third housing 530 and the first housing 510 is 0 degrees, the processor 120 may rotate the third housing 530 with respect to the first housing 510 to change the electronic device 101 into the state 813a. The first reference driving scheme according to the first reference posture may further include a state 809a and a state 811a between the state 807a and the state 813a. The state 809a may be a state in which the side of the second housing 520 and the fifth surface (e.g., the fifth surface 530a of FIG. 5) of the third housing 530 are supported for stable support while changing from the state 807a to the state 813a.

In response to identifying that the state of the electronic device is the state 809a through the plurality of sensors 240, the processor 120 may unfold the third housing 530 with respect to the first housing 510 to change the state into the state 811a.

In response to identifying that the state of the electronic device is the state 811a, the processor 120 may unfold the second housing 520 with respect to the first housing 510, through the first actuator 250. For example, based on identifying that the first housing 510 and the second housing 520 substantially makes a flat surface, the processor 120 may unfold the third housing 530 with respect to the first housing 510 to change the electronic device 101 to the state 813a.

Referring to FIG. 8B, the processor 120 may change the posture of the electronic device 101 according to the reference driving scheme shown in FIG. 8B, based on the second reference posture which is a posture of the electronic device 101. The reference driving scheme may include a driving sequence of the first actuator 250 and the second actuator 260 and a change in angle according to driving of the first actuator 250 or driving of the second actuator 260 in the driving sequence.

The processor 120 may identify the posture of the electronic device 101 through the plurality of sensors 240. For example, the processor 120 may identify a plane facing the direction of gravity, using an acceleration sensor or a gyro sensor of plurality of sensors 240. When the processor 120 identifies that the plane facing the direction of gravity is one surface of the third housing 530, the processor 120 may identify that the posture of the electronic device 101 is the second reference posture. For example, the second reference posture may be a state supported by the structure in contact with the fifth surface (e.g., the fifth surface 530a of FIG. 5).

The processor 120 may change the posture of the electronic device 101 according to the reference driving scheme shown in FIG. 8B, based on the second reference posture which is a posture of the electronic device 101. The reference driving scheme may include a driving sequence of the first actuator 250 and the second actuator 260 and a change in angle according to driving of the first actuator 250 or driving of the second actuator 260 in the driving sequence.

The processor 120 may change the electronic device 101 from the second state 500b (e.g., the folding state) to the first state 500a (e.g., the unfolding state) by changing the electronic device 101 from the state 801b to the state 813b. For example, the state 801b may be the second state 500b. The state 813b may be the first state 500a.

For example, in the state 801b, the processor 120 may identify, through the plurality of sensors 240, that the posture of the electronic device 101 is the second reference posture in the first state. The processor 120 may operate the second actuator 260 to change the state from the state 801b to the state 803b. The processor 120 may drive the second hinge structure in the second hinge cover 560 through the second actuator 260. The second actuator 260 may rotate the first housing 510 with respect to the third housing 530. With the third housing 530 in contact with the structure, the first housing 510 may rotate with respect to the third housing 530. The processor 120 may rotate the angle between the first housing 510 and the third housing 530 up to a specified angle through the second actuator 260. The specified angle may be approximately 90 degrees.

In the state 803b, when it is identified that the angle between the third housing 530 and the first housing 510 is approximately 90 degrees, the processor 120 may rotate the second housing 520 with respect to the first housing 510 to change the electronic device 101 into the state 805b. For example, in the state 803b, the processor 120 may change the posture of the electronic device 101 to the state 805b by unfolding the second housing 520 with respect to the first housing 510, through the first actuator 250.

The processor 120 may drive the first actuator 250 and the second actuator 260, in response to identifying that the angle between the second housing 520 and the first housing 510 moved through the first actuator 250 in the state 805b is a specified angle. The processor 120 may drive the first actuator 250 to unfold the first housing 510 and the second housing 520, and drive the second actuator 260 to fold the first housing 510 and the third housing 530, thereby changing the state into a state 807b.

The state 807b may be the same as or similar to the state 807a of FIG. 8A. The subsequent states 809b, 811b, and 813b may be the same as or similar to the states 809a, 811a, and 813a of FIG. 8A. The processor 120 may perform the same as or similar operation to the operation in FIG. 8A.

Referring to FIG. 8C, the processor 120 may change the posture of the electronic device 101 according to the reference driving scheme shown in FIG. 8C, based on the third reference posture which is a posture of the electronic device 101. The reference driving scheme may include a driving sequence of the first actuator 250 and the second actuator 260 and a change in angle according to driving of the first actuator 250 or driving of the second actuator 260 in the driving sequence.

The processor 120 may identify the posture of the electronic device 101 through the plurality of sensors 240. For example, the processor 120 may identify a plane facing the direction of gravity, using an acceleration sensor or a gyro sensor of the plurality of sensors 240. Based on identifying that the plane facing the direction of gravity is the side surface of the first hinge cover 550 and the third housing 530, the processor 120 may identify that the posture of the electronic device 101 is the third reference posture. For example, the third reference posture may be a state supported by a structure in contact with a portion of the first hinge cover 550 and the third housing 530.

The processor 120 may change the posture of the electronic device 101 according to the reference driving scheme shown in FIG. 8C, based on the third reference state which is a posture of the electronic device 101. The reference driving scheme may include a driving sequence of the first actuator 250 and the second actuator 260 and a change in angle according to driving of the first actuator 250 or driving of the second actuator 260 in the driving sequence.

The processor 120 may change the electronic device 101 from the second state 500b (e.g., the unfolded state) to the first state 500a (e.g., the folded state) by changing from the state 801c to the state 809c. For example, the state 801c may be the second state 500b. The state 809c may be the first state 500a.

For stable support, the processor 120 may unfold the second hinge structure in the second hinge cover 560, while maintaining a side surface of the third housing 530 and one surface of the second support cover 550 in contact with the support surface, as in the state 803c. For example, the processor 120 may operate the second actuator 260 to rotate the third housing 530 with respect to the first housing 510. As the electronic device 120 is changed to the state 803c, the angle between the first housing 510 and the third housing 530 may increase.

The processor 120 may be changed to the state 805c through the state 803c. The processor 120 may drive the second actuator 260 to rotate the third housing 530 with respect to the first housing 510, so that the second housing 520 and a portion of the third housing 530 are kept being supported by the support surface. The angle between the first housing 510 and the third housing 530 may be an angle at which the third surface (e.g., the third surface 520a of FIG. 5) of the second housing 520 and a portion of the third housing 530 may simultaneously contact the support surface.

In response to identifying that the posture of the electronic device 101 corresponds to the state 805c, through the plurality of sensors, the processor 120 may drive the first actuator 250 to rotate the second housing 520 with respect to the first housing 510. A side surface of the second housing 520 may support the electronic device 101 together with a side surface of the third housing 530, while the second housing 520 rotates with respect to the first housing 510. The side surface of the second housing 520 may slide with respect to the support surface, while the second housing 520 is unfolded with respect to the first housing 510, in the state 807c.

By the unfolding operation of the second housing 520 in the state 807c, the posture of the electronic device 101 may be changed to the state 809c.

Referring to FIG. 8D, the processor 120 may change the posture of the electronic device 101 according to the reference driving scheme shown in FIG. 8D, based on the fourth reference posture which is a posture of the electronic device 101. The reference driving scheme may include a driving sequence of the first actuator 250 and the second actuator 260 and a change in angle according to driving of the first actuator 250 or driving of the second actuator 260 in the driving sequence.

In the state 801d, the processor 120 may rotate the third housing 530 with respect to the first housing 310 through the second actuator 260. The electronic device 101 may increase the angle between the first housing 510 and the third housing 530 while the second hinge cover 560 is supported by the structure.

In the state 803d, the processor 120 may change the posture of the electronic device 101 to the state 805d, in response to identifying that the angle between the first housing 510 and the third housing 530 reaches a specified angle (e.g., 90 degrees). The processor 120 may drive the first actuator 250 and the second actuator 260, in response to identifying that the angle between the second housing 520 and the first housing 510 moved through the first actuator 250 in the state 805d is the specified angle (e.g., 90 degrees). The processor 120 may drive the first actuator 250 to unfold the first housing 510 and the second housing 520, and drive the second actuator 260 to fold the first housing 510 and the third housing 530, thereby changing the state to the state 807d.

The state 807d may be the same as or similar to the state 807a of FIG. 8A. The subsequent states (809d, 811d, 813d) may be the same as or similar to the states 809a, 811a, and 813a of FIG. 8A. The processor 120 may perform the same as or similar operation to the operation in FIG. 8A.

Referring back to FIG. 2, when the electronic device 101 is changed from the first state (e.g., the unfolded state) to the second state (e.g., the folded state), the reference driving schemes may include the sequence and method of changing from a posture corresponding to the posture of the electronic device 101 among the plurality of reference postures to the first state.

The processor 120 may be configured to change the first state to the second state, based on controlling the first actuator 250 and the second actuator 260 according to the reference driving scheme.

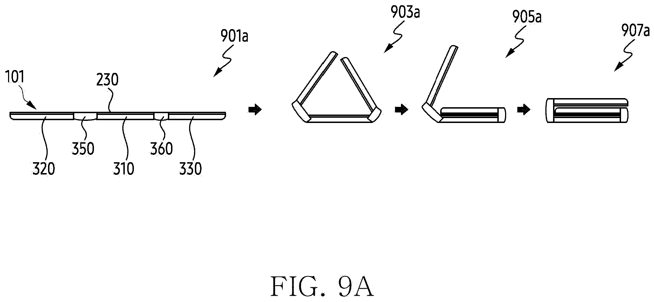

The electronic device 101 may store the reference postures and the reference driving scheme in the first state. The reference postures and the reference driving schemes of the first shape of the electronic device 101 (e.g., the electronic device 101 of FIG. 3) may be illustrated with reference to FIGS. 9A to 9B.

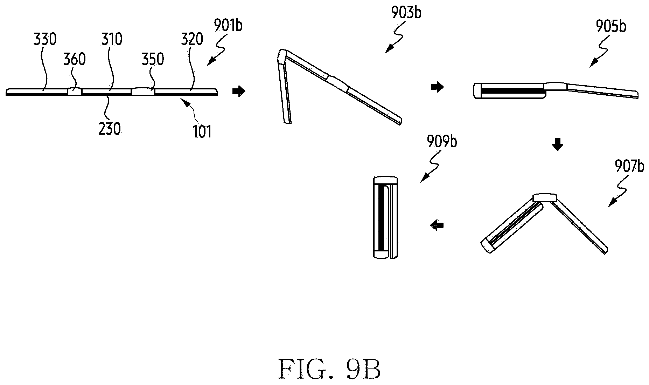

FIGS. 9A and 9B illustrate folding operations according to postures of an electronic device having a first shape, according to an embodiment.

The posture of the electronic device 101 in the state 901a of FIG. 9A may be a first reference posture. The posture of the electronic device 101 in the state 901b of FIG. 9B may be a second reference posture. A plurality of reference postures may include the first reference posture and the second reference posture as described above.

Referring to FIG. 9A, the processor 120 may identify the posture of the electronic device 101 through the plurality of sensors 240. For example, the processor 120 may identify a plane facing the direction of gravity, using an acceleration sensor or a gyro sensor of the plurality of sensors 240. The processor 120 may identify that the plane facing the direction of gravity is one surface of the first housing 310, the second housing 320, and the third housing 330. When the one surface is a surface opposite to the direction in which the flexible display 230 faces, the processor 120 may identify the posture of the electronic device 101 as the first reference posture. For example, the first reference posture may be a state supported by a structure in contact with the second surface (e.g., the second surface 310b of FIG. 3), the fourth surface (e.g., the fourth surface 320b of FIG. 3), and the sixth surface (e.g., the sixth surface 330b of FIG. 3).

The processor 120 may change the posture of the electronic device 101 according to the reference driving scheme shown in FIG. 9A, based on the first reference state which is a posture of the electronic device 101. The reference driving scheme may include a driving sequence of the first actuator 250 and the second actuator 260 and a change in angle according to driving of the first actuator 250 or driving of the second actuator 260 in the driving sequence.

The processor 120 may change from the state 901a to the state 907a to change the electronic device 101 from the first state 300a (e.g., the unfolded state) to the second state 300b (e.g., the folded state). For example, the state 901a may be the first state 300a. The state 907a may be the second state 300b.

In the state 901a, the processor 120 may drive the first actuator 250 to drive the first hinge structure in the first hinge cover 350 so as to rotate the second housing 320 with respect to the first housing 310. The processor 120 may drive the second actuator 260 to drive the second hinge structure in the second hinge cover 350 so as to rotate the third housing 330 with respect to the first housing 310.

The electronic device 101 may be changed to the state 903a by the first actuator 250 and the second actuator 260. The processor 120 may identify a rotation angle of the second housing 320 with respect to the first housing 310 and a rotation angle of the third housing 330 with respect to the first housing 310, through the plurality of sensors 240. For example, in the state 903a, when the processor 120 identifies that the angle between the first housing 310 and the second housing 320 or the angle between the first housing 310 and the third housing 330 is a predetermined angle (e.g., 50 degrees or 60 degrees), the processor 120 may maintain driving of the second actuator 260 and may cease driving of the first actuator 250.

The electronic device 101 may be changed to the state 905a, folding the third housing 330 with respect to the first housing 310 by the second actuator 260. In response to identifying that the posture of the electronic device 101 is the state 905a, the processor 120 may rotate the second housing 320 with respect to the first housing 310 by the first actuator 250.

The electronic device 101 may be changed from the state 905a to the state 907a according to the operation of the first actuator 250.

Referring to FIG. 9B, the processor 120 may change the posture of the electronic device 101 according to the reference driving scheme shown in FIG. 9B, based on the second reference posture which is a posture of the electronic device 101. The reference driving scheme may include a driving sequence of the first actuator 250 and the second actuator 260 and a change in angle according to driving of the first actuator 250 or driving of the second actuator 260 in the driving sequence.

The processor 120 may identify the posture of the electronic device 101 through the plurality of sensors 240. For example, the processor 120 may identify a plane facing the direction of gravity, using an acceleration sensor or a gyro sensor of the plurality of sensors 240. When the processor 120 identifies that the plane facing the direction of gravity is the flexible display 230, the processor 120 may identify that the posture of the electronic device 101 is the second reference posture. For example, the second reference posture may be a state supported by a structure in contact with the first surface (e.g., the first surface 310a of FIG. 3), the third surface (e.g., the third surface 320a of FIG. 3), and the sixth surface (e.g., the fifth surface 330a of FIG. 3).

The processor 120 may change the posture of the electronic device 101 according to the reference driving scheme shown in FIG. 9B, based on the second reference posture which is a posture of the electronic device 101. The reference driving scheme may include a driving sequence of the first actuator 250 and the second actuator 260 and a change in angle according to driving of the first actuator 250 or driving of the second actuator 260 in the driving sequence.

The processor 120 may change the electronic device 101 from the first state 300a (e.g., the unfolded state) to the second state 300b (e.g., the folded state) by changing from the state 901b to the state 909b. For example, the state 901b may be the first state 300a. The state 909b may be the second state 300b.

In the state 901b, the processor 120 may identify that the posture of the electronic device 101 is the second reference posture, through the plurality of sensors 240. The processor 120 may fold the first housing 310 and the third housing 330 through the second actuator 260 in order to change from the state 901b through the state 903b to the state 905b. The processor 120 may drive the first actuator 250 in the state 903b that is an intermediate state of changing to the state 905b to rotate the second housing 320 with respect to the first housing 310. When the posture of the electronic device 101 is changed to the state 905b through the driving of the first actuator 250, the angle between the second housing 320 and the first housing 310, where the side surface of the second housing 320 is in contact with the support surface of the structure, may be less than 180 degrees.

In the state 905b, the processor 120 may identify that the first housing 310 and the third housing 330 face each other and that the sixth surface 330b of the third housing 330 and the third surface 320a of the second housing 320 face the support surface of the structure. The angle between the second housing 320 and the first housing 310 may be an angle at which the side surface of the second housing 320 is in contact with the support surface of the structure. The processor 120 may be configured to reduce the angle between the first housing 310 and the second housing 320 by driving the first actuator 250 based on the identification. The electronic device 101 may be changed to a fully folded state 909b via the state 907b in which the angle between the first housing 310 and the second housing 320 is reduced.

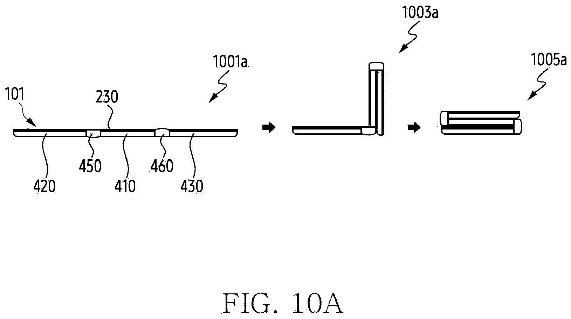

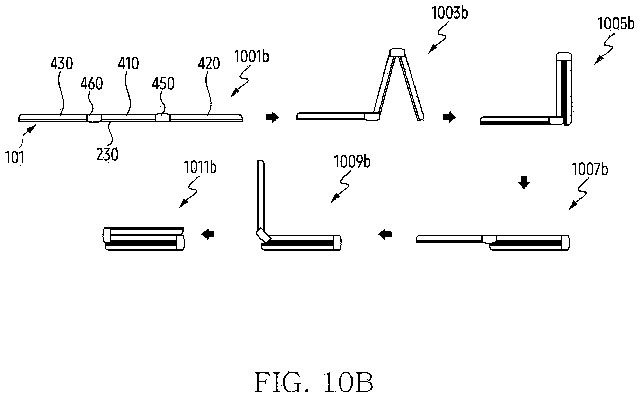

FIGS. 10A and 10B illustrate folding operations according to postures of an electronic device having a second shape according to an embodiment.

The posture of the second shape of the electronic device 101 in a state 1001a in FIG. 10A may be the first reference posture. The posture of the second shape of the electronic device 101 in a state 1001b in FIG. 10B may be the second reference posture. A plurality of reference postures may include the first reference posture and the second reference posture as described above.

Referring to FIG. 10A, the processor 120 may identify the posture of the electronic device 101 through the plurality of sensors 240. For example, the processor 120 may identify a plane facing the direction of gravity, using an acceleration sensor or a gyro sensor of the plurality of sensors 240. The processor 120 may identify that the plane facing the direction of gravity is one surface of the first housing 410, the second housing 420, and the third housing 430. When the one surface is a surface opposite to the direction in which the flexible display 230 faces, the processor 120 may identify the posture of the electronic device 101 as the first reference posture. For example, the first reference posture may be a state supported by a structure in contact with the second surface (e.g., the second surface 410b of FIG. 4), the fourth surface (e.g., the fourth surface 420b of FIG. 4), and the sixth surface (e.g., the sixth surface 430b of FIG. 4).

The processor 120 may change the posture of the electronic device 101 according to the reference driving scheme shown in FIG. 10A, based on the first reference state which is a posture of the electronic device 101. The reference driving scheme may include a driving sequence of the first actuator 250 and the second actuator 260 and a change in angle according to driving of the first actuator 250 or driving of the second actuator 260 in the driving sequence.

The processor 120 may change the electronic device 101 from the first state 400a to the second state 400b by changing from the state 1001a to the state 1005a. For example, the state 1001a may be the first state. The state 1005a may be the second state.

The processor 120 may drive the first actuator 250 and the second actuator 260 in the state 1001a.

In order to change from the state 1001a to the state 1003a, the first actuator 250 may drive the first hinge structure in the first hinge cover 450 to rotate the second housing 420 with respect to the first housing 410. The second housing 420 and the first housing 410 may be substantially perpendicular to each other. In order to change from the state 1001a to the state 1003a, the second actuator 260 may drive the second hinge structure in the second hinge cover 460 to rotate the second housing 430 with respect to the first housing 410. The third housing 430 may face the first housing 410.

In the state 1003a, the electronic device 101 may rotate the first housing 410 with respect to the second housing 420 through the first actuator 250, and may be changed to the folded state 1005a.

Referring to FIG. 10B, the processor 120 may identify the posture of the electronic device 101 through the plurality of sensors 240. For example, the processor 120 may identify a plane facing the direction of gravity, using an acceleration sensor or a gyro sensor of the plurality of sensors 240. When the processor 120 identifies that the plane facing the direction of gravity is the flexible display 230, the processor 120 may identify that the posture of the electronic device 101 is the second reference posture. For example, the second reference posture may be a state supported by a structure in contact with the first surface (e.g., the first surface 410a of FIG. 3), the third surface (e.g., the third surface 420a of FIG. 3), and the fifth surface (e.g., the fifth surface 430a of FIG. 3).

In the state 1001b, the processor 120 may operate the first actuator 250 and the second actuator 260 to change the electronic device 101 into the state 1005b. In the state 1003b, the processor 120 may fold the second housing 420 and the first housing 410 by operation of the first actuator 250. The processor 120 may be changed to the state 1005b by folding the third housing 430 and the first housing 410 by operation of the second actuator 260. In the state 1005b, the processor 120 may drive the second actuator 260, based on identifying that the angle between the first housing 410 and the third housing 430 is a specified angle (e.g., 90 degrees) and identifying that the first housing 410 and the second housing 420 face each other. The second actuator 260 may unfold the third housing 430 and the first housing 410. The posture of the electronic device 101 may be changed from the state 1005b to the state 1007b by means of the second actuator 260.

In the state 1007b, in response to identifying that the third housing 430 and the first housing 410 form substantially the same plane, the processor 120 may fold the third housing 430 and the first housing 410 by means of the second actuator 260. The posture of the electronic device 101 may be changed to the state 1011b, which is the first state, via the state 1009b, by means of folding through the second actuator 260.

According to the above-described embodiment, the first housing 410 and the third housing 430 may be unfolded while the posture is changed from the state 1005b to the state 1007b, and the first housing 410 and the third housing 430 may be folded while the posture is changed from the state 1007b to the state 1011b. By performing the folding operation after unfolding of the third housing 430, the electronic device 101 may provide the flexible display 230 arranged to face the user in the state 1011b.

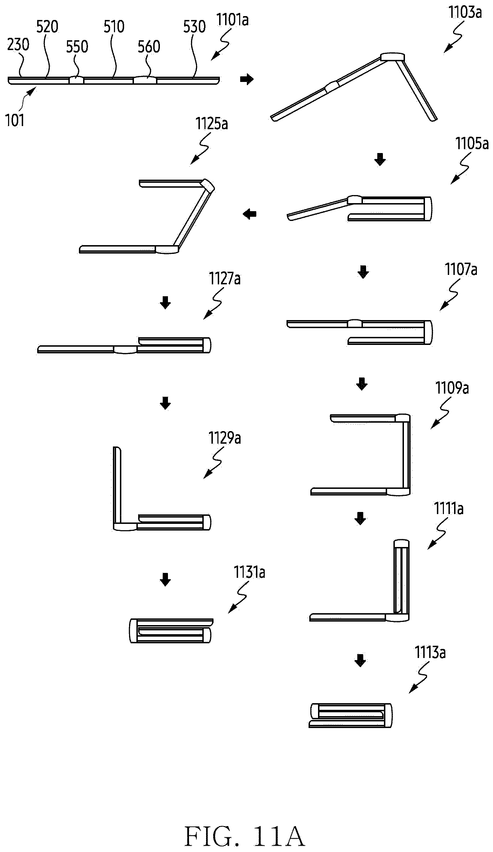

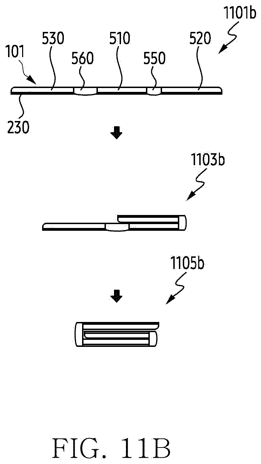

FIGS. 11A and 11B illustrate folding operations according to postures of an electronic device having a third shape according to an embodiment.

The posture of the third shape of the electronic device 101 in the state 1101a in FIG. 11A may be the first reference posture. The posture of the third shape of the electronic device 101 in the third shape in the state 1101b in FIG. 11B may be the second reference posture. A plurality of reference postures may include the first reference posture and the second reference posture as described above.

Referring to FIG. 11A, the processor 120 may identify the posture of the electronic device 101 through the plurality of sensors 240. For example, the processor 120 may identify a plane facing the direction of gravity by using an acceleration sensor or a gyro sensor of the plurality of sensors 240. The processor 120 may identify one surface of the first housing 510, the second housing 520, and the third housing 530 that face the direction of gravity. When the one surface is a surface opposite to the direction in which the flexible display 230 faces, the processor 120 may identify the posture of the electronic device 101 as the first reference posture. For example, the first reference posture may be a state supported by a structure in contact with the second surface (e.g., the second surface 510b of FIG. 5), the fourth surface (e.g., the fourth surface 520b of FIG. 5), and the sixth surface (e.g., the sixth surface 530b of FIG. 5).

The processor 120 may change the posture of the electronic device 101 according to the reference driving scheme shown in FIG. 11A, based on the first reference state which is a posture of the electronic device 101. The reference driving scheme may include a driving sequence of the first actuator 250 and the second actuator 260 and a change in angle according to driving of the first actuator 250 or driving of the second actuator 260 in the driving sequence.

The processor 120 may change the electronic device 101 from the first state 500a to the second state 500b, by changing from the state 1101a to the state 1011b. For example, the state 1101a may be the first state. The states 1113a and 1131a may be the second state.

In the state 1101a, the processor 120 may identify that the posture of the electronic device 101 is the first reference posture through the plurality of sensors 240. The processor 120 may fold the first housing 510 and the third housing 530 through the second actuator 260 in order to change from the state 1101a via the state 1103a to the state 1105a. The processor 120 may rotate the second housing 520 with respect to the first housing 510, by additionally driving the first actuator 250 together with the second actuator 260 in the state 1103a which is an intermediate state changing to the state 1105a.

In the state 1105a, based on identifying that the fifth surface (e.g., the fifth surface 530a of FIG. 5) of the third housing 530 is in contact with the support surface of the structure, the processor 120 may drive the first actuator 250 such that the first housing 510 and the second housing 520 forms a substantially flat surface. The posture of the electronic device 101 changed by the driving of the first actuator 250 may be the state 1107a.

In the state 1107a, the processor 120 may drive the first actuator 250 and the second actuator 260 to change to the state 1109a. By the operation of the first actuator 250, the second housing 520 may be folded with respect to the first housing 510. By the operation of the second actuator 260, the third housing 530 may be unfolded from the first housing 510. The unfolded third housing 530 may provide a space in which the second housing 520 may be disposed.

In the state 1109a, the processor 120 may drive the first actuator 250 based on identifying that the angle between the first housing 510 and the second housing 520 is a specified angle and identifying that the angle between the first housing 510 and the third housing 530 is another specified angle different from the specified angle. For example, the angle between the first housing 510 and the second housing 520 may be approximately 90 degrees, and the angle between the first housing 510 and the third housing 530 may be approximately 90 degrees. The processor 120 may drive the first actuator 250 to fold the second housing 520 to face the first housing 510, thereby changing the posture from the state 1109a to the state 1111a.

The processor 120 may drive the second actuator 260 based on identifying that the posture of the electronic device 101 is the state 1111a. Based on the driving of the second actuator 260, the third housing 530 and the second housing 510 may be converted into the folded state 1113a facing each other.

According to an embodiment, the processor 120 may be configured to change the posture of the electronic device 101 from the state 1105a to the state 1127a. The state 1125a may be an intermediate state that is changed from the state 1105a to the state 1127a. The processor 120 may drive the first actuator 250 and the second actuator 260 in the state 1105a. The first actuator 250 may fold the first housing 510 and the second housing 520. The second actuator 260 may unfold the first housing 510 and the third housing 530. Through the driving of the first actuator 250 and the second actuator 260, the electronic device 101 may be changed from the state 1105a to the state 1127a in which the first housing 510 and the third housing 530 are unfolded and the first housing 510 and the second housing 520 face each other.

In order to change the posture of the electronic device 101 from the state 1127a to the state 1131a, the processor 120 may rotate the third housing 530 with respect to the first housing 510 through the driving of the second actuator 260. With the rotation of the third housing 530 through the driving of the second actuator 260, the posture of the electronic device 101 may be changed to the state 1131a via the state 1129a. The state 1129a may be an intermediate state of changing from the state 1127a to the state 1131a.

Referring to FIG. 11B, the processor 120 may identify the posture of the electronic device 101 through the plurality of sensors 240. For example, the processor 120 may identify a plane facing the direction of gravity, using an acceleration sensor or a gyro sensor of the plurality of sensors 240. When the processor 120 identifies that the plane facing the direction of gravity is the flexible display 230, the processor 120 may identify that the posture of the electronic device 101 is the second reference posture. For example, the second reference posture may be a state supported by a structure in contact with the first surface (e.g., the first surface 510a of FIG. 5), the third surface (e.g., the third surface 520a of FIG. 5), and the fifth surface (e.g., the fifth surface 530a of FIG. 5).

The processor 120 may change the posture of the electronic device 101 according to the reference driving scheme shown in FIG. 11B, based on the second reference posture which is a posture of the electronic device 101. The reference driving scheme may include a driving sequence of the first actuator 250 and the second actuator 260 and a change in angle according to driving of the first actuator 250 or driving of the second actuator 260 in the driving sequence.

The processor 120 may change the electronic device 101 from the first state 500a to the second state 500b by changing from the state 1101b to the state 1105b. For example, the state 1101b may be the first state. The state 1105b may be the second state.

In the state 1101b, the processor 120 may drive the first actuator 250 to drive the first hinge structure in the first hinge cover 550 to rotate the second housing 520 with respect to the first housing 510. The electronic device 101 may be changed to the state 1103b by the first actuator 250. The state 1103b may be a state in which the first housing 510 and the second housing 520 face each other, and the first housing 510 and the third housing 530 form substantially the same surface.

In the state 1103b, the processor 120 may drive the second actuator 260 to drive the second hinge structure in the second hinge cover 560 so as to rotate the third housing 530 with respect to the first housing 510. The electronic device 101 may drive the second actuator 560 to have the third housing 530 disposed on the second housing 520, so as to be changed to a folded state 1105b.

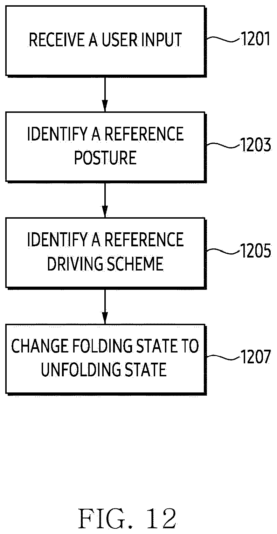

FIG. 12 is a flowchart illustrating an unfolding operation of an electronic device according to an embodiment.

Referring to FIG. 12, in operation 1201, the processor 120 (e.g., the processor 120 of FIG. 1) may be configured to receive a user input. For example, the processor 120 may receive a user input indicating switching from the first state to the second state. The first state (e.g., the first state 300a of FIG. 3, the first state 400a of FIG. 4, or the first state 500a of FIG. 5) may be a state including the flexible display at least partially covered by the second housing (e.g., the second housing 320 of FIG. 3, the second housing 420 of FIG. 4, or the second housing 520 of FIG. 5) and the third housing (e.g., the third housing 330 of FIG. 3, the third housing 430 of FIG. 4, or the third housing 530 of FIG. 5). The second state (e.g., the second state 300b of FIG. 3, the second state 400b of FIG. 4, or the second state 500b of FIG. 5) may be a state including the flexible display 230 exposed to the outside. The user input may be an input for switching from the first state to the second state. The user input may include a physical input such as a button or a touch input included in the electronic device, and a voice command.

In operation 1203, the processor 120 may identify a reference posture. The reference posture may be applied differently depending on a state of the electronic device 101. For example, when the state of the electronic device 101 is a folded first state, the processor 120 may identify the reference posture corresponding to the posture of the electronic device, based on a plurality of reference postures corresponding to the first state. In response to the user input, the processor 120 may identify the reference posture corresponding to the posture of the electronic device identified through a plurality of sensors 240 among a plurality of reference postures predetermined for the first state. The plurality of reference postures predetermined for the first state may refer to a posture in which the electronic device 101 is stably disposed. For example, it may be a state in which one surface of the electronic device 101 (e.g., the second surface 310b of the first housing 310, the fourth surface 320b of the second housing 320, one surface of the first hinge case 350, or one surface of the second hinge case 360 and the side surface of the third housing 330, in FIG. 3) is disposed on a support surface (e.g., a surface on a table). For example, it may be a state in which one surface of the electronic device 101 (e.g., the fourth surface 420b of the second housing 420, the fifth surface 430a of the third housing 430, the side surfaces of the first hinge case 450 and the third housing 430, and the side surfaces of the second hinge case 460 and the second housing 420, in FIG. 4) is disposed on the support surface. For example, it may be a state in which one surface of the electronic device 101 (e.g., the first surface 510a of the first housing 510, the fifth surface 530a of the third housing 530, one surface of the first hinge cover 550, a side surface of the third housing 530, and one surface of the second hinge cover 560, in FIG. 5) is disposed on the support surface. The reference posture may correspond to the initial states (e.g., the states 601a, 601b, 601c, 601d, 701a, 701b, 701c, 701d, 801a, 801b, 801c and 801d) of FIGS. 6A to 8D.

In operation 1205, the processor 120 may identify a reference driving scheme. The processor 120 may identify a reference driving scheme corresponding to the reference posture among a plurality of reference driving schemes. The reference driving schemes may include operations for changing the state of the electronic device 101 described with reference to FIGS. 6A to 8D. For example, when the posture of the electronic device 101 corresponds to the state 601a of FIG. 6A, the processor 120 may identify the operation of changing the electronic device 101 into the unfolded state 607a or state 611a, according to a change in the states illustrated in FIG. 6A corresponding to the state 601a which is the reference posture state.

In operation 1207, the processor 1207 may change the folding state to the unfolding state. The processor 120 may change the first state to the second state, based on controlling the first actuator and the second actuator according to the reference driving scheme.

While the above-described operations 1201 to 1207 have been described as switching from the folding state to the unfolding state, the disclosure is not limited thereto, and it may also perform switching from the unfolding state to the folding state. For example, the processor 120 may obtain a user input indicating that the unfolded state is changed to the folded state. In response to the user input, the processor 120 may select a reference posture corresponding to the posture of the electronic device identified through the plurality of sensors from among a plurality of reference postures predetermined for the second state. The processor 120 may select a reference driving scheme corresponding to the reference posture from among a plurality of reference driving schemes. The processor 120 may change the second state to the first state based on controlling the first actuator and the second actuator according to the reference driving scheme.

According to the above-described embodiment, an electronic device 101 may include a first housing (e.g., the first housing 310 of FIG. 3) including a first surface and a second surface opposite to the first surface, a second housing (e.g., the second housing 320 of FIG. 3) including a third surface and a fourth surface opposite to the third surface, and a third housing (e.g., the third 330 of FIG. 3) including a fifth surface and a sixth surface opposite to the fifth surface. The electronic device may further include a first hinge structure (e.g., the first hinge structure 302) pivotably coupling the first housing and the second housing and a second hinge structure (e.g., the second hinge structure 323) pivotably coupling the first housing and the third housing. The electronic device may further include a first actuator (e.g., the first actuator 250 of FIG. 3) operating the first hinge structure and a second actuator (e.g., the second actuator 260 of FIG. 3) coupled with the second hinge structure. The electronic device may further include a flexible display disposed on the first surface, the third surface and the fifth surface and including a first area (e.g., the first display area 230a of FIG. 3) corresponding to the first surface, a second area (e.g., the second display area 230b of FIG. 3) corresponding to the second surface, and a third area (e.g., the third display area 230c of FIG. 3) corresponding to the third surface. The electronic device may further include a plurality of sensors (e.g., a plurality of sensors 240 of FIG. 2) and at least one processor (e.g., the processor 120 of FIG. 2).

According to an embodiment, the processor may be configured to obtain a user input indicating a change (transit) from a folded state in which the flexible display is disposed to be at least partially covered by the second housing and the third housing, to an unfolded state in which the flexible display is disposed to be exposed to an outside. The processor may be configured to, in response to the user input, select a reference posture corresponding to a posture of the electronic device identified through the plurality of sensors among a plurality of predetermined reference postures with respect to the folded state. The processor may be configured to select a reference driving scheme corresponding to the reference posture among a plurality of reference driving schemes. The processor may be configured to, based on controlling the first actuator and the second actuator according to the reference driving scheme, change the folded state to the unfolded state.

According to an embodiment, the reference posture may be selected from the plurality of reference postures, based on a plane facing an identified direction of gravity, through the plurality of sensors.

According to an embodiment, the reference driving scheme may include a driving sequence of the first actuator and the second actuator and a change in angle according to driving of the first actuator or driving of the second actuator in the driving sequence.

According to an embodiment, the first actuator may be configured to transmit a rotational force to one of a plurality of gears in the first hinge structure.

According to an embodiment, the second actuator may be configured to transmit a rotational force to one of a plurality of gears in the second hinge structure.

According to an embodiment, the processor may be configured to provide the user a notification related to a posture of the electronic device, in response to the user input, when the posture of the electronic device identified through the plurality of sensors for the folded state is different from the plurality of predetermined reference postures.

According to an embodiment, the plurality of predetermined reference postures may include, in the folded state in which one surface of the first housing and one surface of the third housing face outward and directions one surface of the first housing and one surface of the third housing face are different from each other, a first posture in which the electronic device is supported by one surface of the third housing, a second posture in which the electronic device is supported by one surface of the first housing, a third posture in which the electronic device is supported by the first hinge structure, and a fourth posture in which the electronic device is supported by the second hinge structure.

The reference driving scheme corresponding to the first posture, the second posture, or the third posture may rotate the second housing so that a first angle between the first housing and the second housing corresponds to a predetermined first angle, based on driving of the first hinge structure through the first actuator. The reference driving scheme corresponding to the first posture, the second posture, or the third posture may rotate the third housing with respect to the first housing, in response to the first angle matching the predetermined first angle.

According to an embodiment, the first predetermined angle of the reference driving scheme corresponding to the first posture may be in a range of 50 to 70 degrees.

According to an embodiment, the processor may be configured to rotate simultaneously the second housing and the third housing with respect to the first housing, based on a second angle between the third housing and the first housing corresponding to a predetermined second angle.

According to an embodiment, according to the reference driving scheme corresponding to the fourth posture, the processor may rotate the second housing so that a first angle between the first housing and the second housing corresponds to a predetermined first angle, based on driving of the first hinge structure through the first actuator.

According to an embodiment, in response to the first angle matching the predetermined first angle, the processor may pivotably move the third housing with respect to the first housing so that a second angle between the third housing and the first housing corresponds to a predetermined second angle, based on driving of the second hinge structure through the second actuator.

According to an embodiment, the processor may be configured to, in response to the second angle matching the predetermined second angle, drive the first actuator and the second actuator to pivotably move the second housing and the third housing with respect to the first housing, such that the first surface and the second surface face each other and the first surface and the third surface face the same direction.

According to an embodiment, the processor may obtain a user input indicating changing from the unfolded state to the folded state. The processor may select a reference posture corresponding to a posture of the electronic device identified through the plurality of sensors from among a plurality of predetermined reference postures for the unfolded state, in response to the user input. The processor may select a reference driving scheme corresponding to the reference posture from among a plurality of reference driving schemes. The processor may change the unfolded state to the folded state, based on controlling the first actuator and the second actuator according to the reference driving scheme.

The predetermined reference posture may be selected, in the unfolded state of the flexible display, from among a fifth posture in which a direction the flexible display faces is equal to a direction of gravity and a sixth posture in which the direction the flexible display faces is opposite to the direction of gravity.

According to an embodiment, the processor may be configured to, based on a reference driving scheme corresponding to the fifth posture, rotate the second housing through the first actuator so that the first angle between the first housing and the second housing corresponds to a predetermined first angle.

According to an embodiment, the processor may be configured to rotate the third housing through the second actuator so that the second angle between the first housing and the third housing corresponds to a predetermined second angle.

According to an embodiment, the processor may be configured to rotate the third housing so that the first surface and the fifth surface face each other, in response to the first angle matching the predetermined first angle and the second angle matching the predetermined second angle.

According to an embodiment, the processor may be configured to rotate the second housing to face the sixth surface, in response to the first surface facing the fifth face.

According to an embodiment, the plurality of sensors may include a first sensor for detecting a posture of the electronic device, a second sensor for obtaining data related to an angle between the first housing and the second housing, and a third sensor for obtaining data related to an angle between the first housing and the third housing.

According to an embodiment, the reference posture may be selected, in the folded state in which the first housing is disposed on the second housing and the third housing face is disposed on the first housing, a first posture in which the electronic device is supported by the second housing, a second posture in which the electronic device is supported by the third housing, a third posture in which the electronic device is supported by the first hinge structure and the third housing, and a fourth posture in which the electronic device is supported by the second hinge structure and the second housing.

According to an embodiment, the reference postures may be selected, in the folded state in which the first surface and the fifth surface face outward and directions in which the first surface and the fifth surface face are different, from a first posture in which the electronic device is supported by the first surface, a second posture in which the electronic device is supported by the fifth surface, a third posture in which the electronic device is supported by the first hinge structure, and a fourth posture in which the electronic device is supported by the second hinge structure and the second housing.

According to an embodiment, an electronic device 101 may comprise a first housing (e.g., the first housing 310 of FIG. 3) including a first surface and a second surface opposite to the first surface, a second housing (e.g., the second housing 320 of FIG. 3) including a third surface and a fourth surface opposite to the third surface, a third housing (e.g., the third housing 330 of FIG. 3) including a fifth surface and a sixth surface opposite to the fifth surface.

According to an embodiment, the electronic device may include a first hinge structure (e.g., the first hinge structure 302 of FIG. 3) rotatably coupling the first housing and the second housing to change an angle between the first surface and the third surface from 0 degrees to 180 degrees and a second hinge structure (e.g., the second hinge structure 303 of FIG. 3) rotatably coupling the first housing and the third housing to change an angle between the first surface and the fifth surface from 0 degrees to 180 degrees.

According to an embodiment, the electronic device may include a first actuator (e.g., the first actuator 250 of FIG. 3) coupled with the first hinge structure and a second actuator (e.g., the second actuator 260 of FIG. 3) coupled with the second hinge structure.

According to an embodiment, the electronic device may include a flexible display (e.g., the flexible display 230 of FIG. 3) disposed on the first surface, the third surface and the fifth surface, including a first area corresponding to the first surface, a second area corresponding to the second surface, and a third area corresponding to the third surface.

According to an embodiment, the electronic device may further include a plurality of sensors (e.g., the plurality of sensors 240 of FIG. 2) and at least one processor (e.g., the processor 120 of FIG. 2).

According to an embodiment, the processor may be configured to obtain a user input indicating changing from a folded state in which the flexible display is disposed to be at least partially covered by the second housing and the third housing, to an unfolded state in which the flexible display is disposed to be exposed to an outside.

According to an embodiment, the processor may be configured to, in response to the user input, select a reference posture corresponding to a posture of the electronic device identified through the plurality of sensors from among a plurality of predetermined reference postures with respect to the folded state.

According to an embodiment, the processor may be configured to identify a reference driving scheme corresponding to the reference posture from among a plurality of reference driving schemes.

According to an embodiment, the processor may be configured to, based on controlling the first actuator and the second actuator according to the reference driving scheme, change the folded state to the unfolded state.

According to an embodiment, the reference posture may be selected, in the folded state in which the second surface and the six surface face outward and directions in which the second surface and the six surface face are different from each other, a first posture in which the electronic device is supported by the second surface, a second posture in which the electronic device is supported by the sixth surface, a third posture in which the electronic device is supported by the first hinge structure, and a fourth posture in which the electronic device is supported by the second hinge structure and the second housing.

According to an embodiment, the reference driving scheme corresponding to the first posture, the second posture, or the third posture may be configured to rotate the second housing so that a first angle between the first housing and the second housing corresponds to a predetermined first angle, based on driving of the first hinge structure through the first actuator, and rotate the third housing with respect to the first housing, in response to the first angle matching the predetermined first angle.

According to an embodiment, the reference driving scheme corresponding to the fourth posture may be configured to: rotate the second housing so that a first angle between the first housing and the second housing corresponds to a predetermined first angle, based on driving of the first hinge structure through the first actuator; in response to the first angle matching the first predetermined angle, rotate the third housing with respect to the first housing so that a second angle between the third housing and the first housing corresponds to a predetermined second angle, based on driving of the second hinge structure through the second actuator; in response to the second angle matching the predetermined second angle, drive the first actuator and the second actuator to cause the first surface and the second surface to face each other; and rotate the second housing and the third housing with respect to the first housing so that the first surface and the third surface face the same direction.

According to an embodiment, the processor may be configured to receive a user input indicating that the unfolded state is to be changed to the folded state, and in response to the user input, identify a reference posture corresponding to a posture of the electronic device identified through the plurality of sensors among a plurality of predetermined reference postures for the unfolded state. The processor may be configured to identify a reference driving scheme corresponding to the reference posture among a plurality of reference driving schemes. The processor may be configured to change the unfolding state to the folding state, based on controlling the first actuator and the second actuator according to the reference driving scheme.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment, the electronic devices are not limited to those described above.

It should be appreciated that various embodiments and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may be interchangeably used with other terms, for example, 'logic', 'logic block', 'part', 'portion', or 'circuit'. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments disclosed herein may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a first housing including a first surface and a second surface opposite to the first surface;
a second housing including a third surface and a fourth surface opposite to the third surface;
a third housing including a fifth surface and a sixth surface opposite to the fifth surface;
a first hinge structure rotatably coupling a first housing and a second housing;
a first actuator coupled with the first hinge structure;
a second hinge structure rotatably coupling the first housing and the third housing;
a second actuator coupled with the second hinge structure;
a flexible display disposed on the first surface, the third surface and the fifth surface, including a first area corresponding to the first surface, a second area corresponding to the second surface, and a third area corresponding to the third surface;
a plurality of sensors; and
processor;
wherein the processor is configured to:
receive a user input indicating a change from a folded state including the flexible display at least partially covered by the second housing and the third housing, to an unfolded state including the flexible display exposed to an outside;
in response to the user input, identify a reference posture corresponding to a posture of the electronic device identified through the plurality of sensors among a plurality of predetermined reference postures with respect to the folded state;
identify a reference driving scheme corresponding to the reference posture among a plurality of reference driving schemes; and
based on controlling the first actuator and the second actuator according to the reference driving scheme, switch the folded state to the unfolded state.

2. The electronic device of claim 1, wherein the reference posture is identified based on a plane facing a direction of gravity identified through the plurality of sensors.

3. The electronic device of claim 1, wherein the reference driving scheme includes a driving sequence of the first actuator and the second actuator and a change in angle according to the driving of the first actuator or the driving of the second actuator within the driving sequence.

4. The electronic device of claim 1, wherein the first actuator is configured to transmit rotational force to one of a plurality of gears within the first hinge structure, and
wherein the second actuator is configured to transmit rotational force to one of a plurality of gears within the second hinge structure;

5. The electronic device of claim 1, wherein the processor is configured to provide a notification related to the posture of the electronic device to the user, in response to the user input, when the posture of the electronic device identified through the plurality of sensors for the folding state is different from the plurality of predetermined reference postures.

6. The electronic device of claim 1, wherein the plurality of predetermined reference postures include:
in the folded state in which the second surface and the sixth surface face outward and directions in which the second surface and the sixth surface face are in different,
a first posture in which the electronic device is supported by the sixth surface,
a second posture in which the electronic device is supported by the second surface
a third posture in which the electronic device is supported by the first hinge structure, and
a fourth posture in which the electronic device is supported by the second hinge structure.

7. The electronic device of claim 6, wherein the reference driving scheme corresponding to the first posture, the second posture, or the third posture is configured to:
rotate the second housing so that a first angle between the first housing and the second housing corresponds to a predetermined first angle, based on a driving of the first hinge structure through the first actuator, and
rotate the third housing relative to the first housing, in response to the first angle matching the predetermined first angle.

8. The electronic device of claim 7,
wherein the predetermined first angle of the reference driving scheme corresponding to the first posture is 50 to 70 degrees, and
wherein the processor is configured to rotate simultaneously the second housing and the third housing with respect to the first housing, based on a second angle between the third housing and the first housing matching a predetermined second angle.

9. The electronic device of claim 6, wherein according to the reference driving scheme corresponding to the fourth posture, the processor is configured to:
rotate the second housing so that a first angle between the first housing and the second housing corresponds to a predetermined first angle, based on a driving of the first hinge structure through the first actuator,
in response to the first angle matching the predetermined first angle, rotate the third housing relative to the first housing so that a second angle between the thirs housing and the first housing corresponds to a predetermined second angle, based on a driving of the second hinge structure through the second actuator, and
in response to the second angle matching the predetermined second angle, drive the first actuator and the second actuator to cause the first surface and the second surface to face each other, and rotate the second housing and the third housing relative to the first housing, so that the first surface and the third surface face a same direction.

10. The electronic device of claim 1, wherein the processor is configured to:
receive a user input indicating that the unfolded state is to be changed to the folded state,
in response to the user input, identify a reference posture corresponding to a posture of the electronic device identified through the plurality of sensors among a plurality of predetermined reference postures for the unfolded state,
identify a reference driving scheme corresponding to the reference posture among a plurality of reference driving schemes, and
change the unfolded state to the folded state, based on controlling the first actuator and the second actuator according to the reference driving scheme.

11. The electronic device of claim 10, wherein the plurality of reference postures include:
a fifth posture in which a direction of the flexible display is equal to a direction of gravity in the unfolded state of the flexible display, and
a sixth posture in which the direction of the flexible display is opposite to the direction of gravity, in the folded state.

12. The electronic device of claim 11, wherein based on the reference driving scheme corresponding to the fifth posture, the processor is configured to:
rotates the second housing through the first actuator so that the first angle between the first housing and the second housing corresponds to a predetermined first angle,
rotates the third housing through the second actuator so that the second angle between the first housing and the third housing corresponds to a predetermined second angle,
rotate the third housing so that the first surface and the fifth surface face each other, in response to the first angle matching the first angle and the second angle matching the second angle, and
rotate the second housing so that the second surface faces the sixth surface, in response to the first surface facing the fifth face.

13. The electronic device of claim 1, wherein the plurality of sensors include:
a first sensor for detecting a posture of the electronic device;
a second sensor for obtaining data related to an angle between the first housing and the second housing; and
a third sensor for obtaining data related to an angle between the first housing and the third housing.

14. The electronic device of claim 1, wherein the plurality of predetermined reference postures include:
in the folded state in which the first housing is disposed on the second housing and the third housing is disposed on the first housing,
a first posture in which the electronic device is supported by the second housing;
a second posture in which the electronic device is supported by the third housing;
a third posture in which the electronic device is supported by the first hinge structure and the third housing; and
a fourth posture in which the electronic device is supported by the second hinge structure and the second housing.

15. The electronic device of claim 1, wherein the plurality of predetermined reference postures include:
in the folded state in which the first surface and the fifth surface face outward and directions the first surface and the fifth surface face are different,
a first posture in which the electronic device is supported by the first surface;
a second posture in which the electronic device is supported by the fifth surface;
a third posture in which the electronic device is supported by the first hinge structure; and
a fourth posture in which the electronic device is supported by the second hinge structure.
